# EUROPEAN PATENT APPLICATION

(11) **EP 2 500 851 A1**
(43) Date of publication of application: **19.09.2012**
(21) Application number: 12159916.1
(22) Date of filing: 16.03.2012
(51) Int. Cl.: G06Q 10/00

(54) **Information processing apparatus, multi function printer, and image reading apparatus**

(30) Priority: 18.03.2011 JP 2011061627
(71) Applicant: Oki Data Corporation, Tokyo 108-8551 (JP)
(72) Inventor: Ochi, Kengo, Tokyo, 108-8551 (JP)
(74) Representative: Betten & Resch

(57) **Abstract**

An information processing apparatus is used to send emails. An email generating section (52) is configured to generate an email. The destination information for the email is received through an inputting section (20). An email transmitting section (56) is configured to transmit the email to a destination. A destination address determining section (54) is configured to determine the destination based on the destination information received through the inputting section. A source email address deciding section (53) is configured to decide a source email address of the email based on the determination made by the destination address determining section.

## Description

### BACKGROUND OF THE INVENTION

### FIELD OF THE INVENTION

The present invention relates to an information processing apparatus, a multi function printer, and an image reading apparatus.

### DESCRIPTION OF THE RELATED ART

For example, personal computers are capable of transmitting emails and have the functions of communicating and performing arithmetic operations. Multi function printers have a communicating section, image reading section, and image printing section, and further perform the function of a network scanner and the function of an internet FAX. Among image reading apparatus is a network scanner that performs the functions of communicating, arithmetic operations, and reading images. Information processing apparatus in this specification covers apparatus including multi function printers and image reading apparatus.

Some existing information processing apparatus capable of transmitting emails are an apparatus in which the user sends a mail by specifying the mail address of a destination. One such apparatus is disclosed by Japanese patent publication No. 2001-010030.

Existing information processing apparatus suffers from a problem in that the sender's email address could be transmitted to the destination of an email even if the sender does not intend to send his email address. This causes unintended disclosure of the user's email address, which is detrimental to security.

### SUMMARY OF THE INVENTION

The present invention was made in view of the aforementioned drawbacks.

An object of the invention is to provide an information processing apparatus, multi function printer, and information reading apparatus, which enable the user to set the mail address of a user's intended source email address in accordance with the user's intended destination email address.

An information processing apparatus is used to send emails. An email generating section (52) is configured to generate an email. The destination information for the email is received through an inputting section (20). An email transmitting section (56) is configured to transmit the email to a destination. A destination address determining section (54) is configured to determine the destination based on the destination information received through the inputting section. A source email address deciding section (53) is configured to decide a source email address of the email based on the determination made by the destination address determining section (54).

An information processing apparatus is used to send emails. An email generating section (52) is configured to generate an email. The destination information for the email is received through an inputting section (20). An email transmitting section (56) is configured to transmit the email to a destination. A source email address deciding section (53) is configured to decide the destination based on the destination information. A display section (23) is employed. If the source email address deciding section (53) decides, based on the destination information received through the inputting section (20), that the sender's private email address should be used as the source email address, then the source email address deciding section (53) causes the display section to display to a sender that the sender's private email address should be used as the source email address.

An multi function printer incorporates an information processing apparatus, and further includes an image reading section (10) configured to read an image of a document and an image forming section (70) configured to print the image.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 illustrates an information processing apparatus according to a first embodiment and other information processing apparatus connected via a network;
Fig. 2 illustrates the configuration of a multi function printer (MFP) as information processing apparatus;
Fig. 3 illustrates a human interface;
Fig. 4 illustrates an alternative email address table;
Fig. 5 illustrates an account information table;
Fig. 6 is a flowchart illustrating an email transmission process performed by the MFP of the first embodiment;
Fig. 7 is a flowchart illustrating a the source email address deciding process performed by the MFP of the first embodiment;
Fig. 8 illustrates an example of the information displayed on a liquid crystal display;
Fig. 9 illustrates an email to be sent to an external destination;
Fig. 10 illustrates another email to be sent to an internal destination;
Fig. 11 illustrates the configuration of the MFP of a modification #1;
Fig. 12 illustrates a sender's name table;
Fig. 13 is a flowchart illustrating the email transmission process performed by the MFP of the modification #1;
Fig. 14 is a flowchart illustrating the source email address deciding process performed by the MFP of a modification #1;
Fig. 15 illustrates an email when sender information is added to the email shown in Fig. 9;
Fig. 16 illustrates the configuration of the MFP 100B as an information processing apparatus according to a modification #2;
Fig. 17 is a flowchart illustrating the email mail transmission process performed by the MFP 100B;
Fig. 18 illustrates the MFP 100C as an information processing apparatus according to a modification #3;
Fig. 19 is a flowchart illustrating the email transmission process performed by the MFP of modification 3;
Fig. 20 illustrates the configuration of an MFP 100D as an information processing apparatus according to a modification #4;
Fig. 21 is a flowchart illustrating the email transmission process performed by the MFP 100D;
Fig. 22 and Fig. 23 are flowcharts illustrating the source email address deciding process performed by the MFP of a modification #4;
Fig. 24 illustrates an example of the message displayed at step S315D;
Fig. 25 illustrates an MFP according to a modification #5;
Fig. 26 illustrates an alternative email address table of the modification #5;
Fig. 27 is a flowchart illustrating the email transmission process performed in the MFP of modification #5;
Fig. 28 is a flowchart illustrating the source email address deciding process performed by the MFP of modification #5;
Fig. 29 illustrates the MFP 100F as an information processing apparatus according to a second embodiment;
Figs. 30A and 30B illustrate the configuration of the information stored in the IC card;
Fig. 31 is a flowchart illustrating an email transmission process performed in the MFP of the second embodiment;
Fig. 32 illustrates the source email address deciding process;
Fig. 33 illustrates the configuration in which the image information processing apparatus is used as a scanner; and
Fig. 34 illustrates a configuration in which the information processing apparatus according to the present invention is used as a personal computer.

### DETAILED DESCRIPTION OF THE INVENTION

The present invention will be described in detail with reference to the accompanying drawings. It will be understood that it is not intended to limit the invention to the drawings. Common and/or like elements have been given like reference characters throughout the drawings and their duplicate description is omitted.

### {Definition of Terms}

The terms used in the specification are defined as follows:
The term "user" covers someone who uses email on a network, and includes a person, an enterprise, and an apparatus.

The term "destination" covers the user at an email destination, and takes the form of an email address that identifies an individual user at the destination to which an email is sent.

The term "sender" covers a user who sends an email. The term "sender's mail address" refers to the email address of a user who operates an human interface to send an email.

The term "source email address" refers to an email address actually attached as header information to an email to be sent.

The "destination email address" identifies a user who receives an email, and takes the form of an email address. The term "destination email address" is actually attached as a part of header information to an email to be sent.

"Alternative email address" refers to an email address that is used as a source email address in place of the "source email address."

### First Embodiment

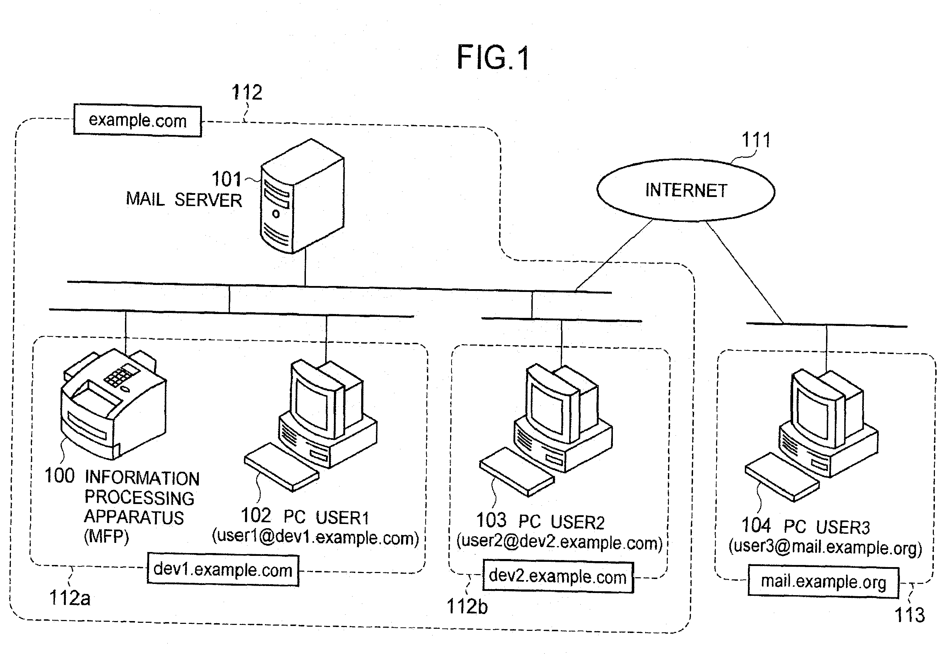

Fig. 1 illustrates an information processing apparatus 100 according to a first embodiment and other information processing apparatus connected via a network. With reference to Fig. 1, a description will be given of the manner in which the information processing apparatus 100 is connected to other information processing apparatus via the network.

The information processing apparatus 100 takes the form of, for example, a network scanner, a multi function printer, or a facsimile machine. The multi function printer and facsimile machine have a network scanner function and an image forming function. The network scanner performs a Scan-to-Email function, and includes an image reading unit, and a communication function, and an arithmetic operation function, and sends the image data of a document read with the image reading unit. The image data is sent to a recipient by way of an email attachment. The facsimile machine serves as a network scanner and a printer. The information processing apparatus 100 will be described in terms of a multi function printer (MFP) that has a network scanner function and an image forming function.

Networks 112 and 113 are connected to each other via the internet 111. Each of the networks 112 and 113 is independently managed by corresponding enterprises. The networks 112 and 113 are assigned corresponding domains that identify the respective networks. "Example" is employed as a second level domain. Therefore, in the present embodiment, the network 112 has a domain name "example. com" and the network 113 has a domain name "mail.example.org." The network 112 is further divided into two sub domains: network 112a and network 112b. The network 112a has a sub domain name "dev1.example.com" and the network 112b has a sub domain name "dev2.example.com."

An MFP 100 and a personal computer (PC) 102 are in the network 112a. A mail server 101 is used in the network 112. A PC 104 is in the network 113.

### Mail Server

The mail server 101 is a general purpose information processing apparatus that manages transmission and reception of emails. The mail server 101 receives emails from the MFP 100. If an email is to be sent to an internal destination, the email is saved in a mail box in the mail server 101 which is created for each account. If an email is to be sent to an external destination, the email is transferred to other server (not shown).

### Personal Computer

The personal computers (PCs) 102, 103, and 104 are general purpose information processing apparatus that have the arithmetic function and memory function, and perform information processing using these functions. The PCs 102, 103, and 104 have a mailer that is implemented in software and has a communication function. The PCs 102 and 103 receive emails from the mail server 101 while the PC 104 receives emails from other mail servers (not shown). The PCs 102, 103, and 104 display the emails in visual form.

The user1 who is the owner of the PC 102 is assigned an email address user1@dev1.example.com, the user2 who is the owner of the PC 103 is assigned an email address user2@dev2.example.com, and the user3 who is the owner of the PC 104 is assigned an email address user3@mail.example.org. The user1 and user2 are employees of a single company but belong to different departments.

### Configuration of MFP According to First Embodiment

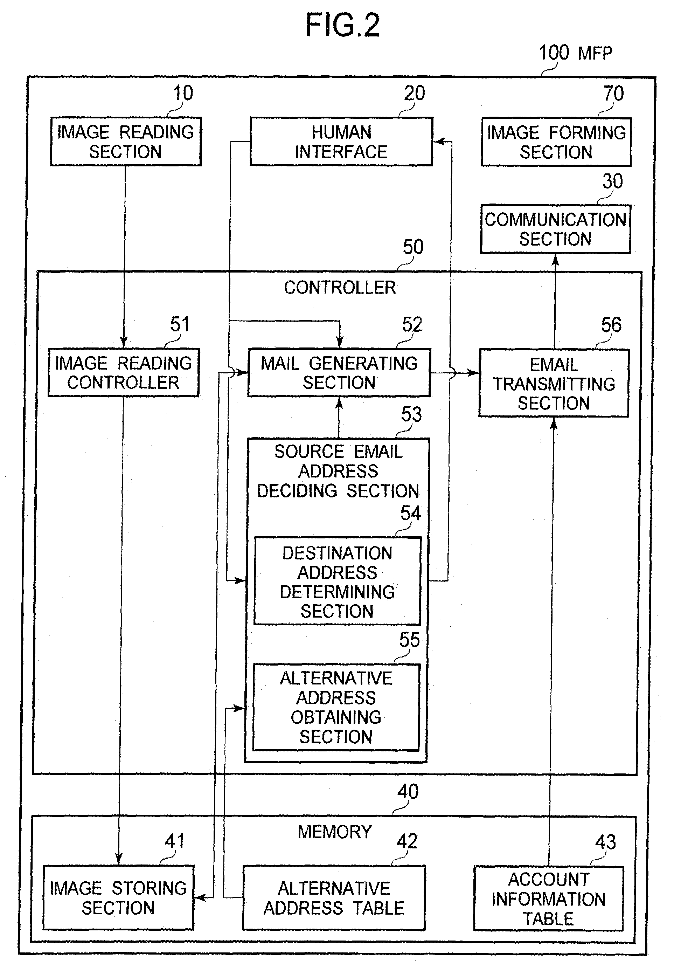

Fig. 2 illustrates the configuration of the MFP 100 as information processing apparatus. The configuration of the MFP 100 will be described with reference to Fig. 2. The MFP 100 includes an image reading section 10, human interface 20, communication section 30, memory 40, controller 50, and image forming section 70.

### Image Reading Section

The image reading section 10 takes the form of an auto document feeder (ADF) or a flat bed, and mainly includes a line sensor, light emitting elements aligned in line, mechanism, motor, and other sensors. The image reading section 10 reads the image of an original document placed on the MFP 100.

### Human Interface

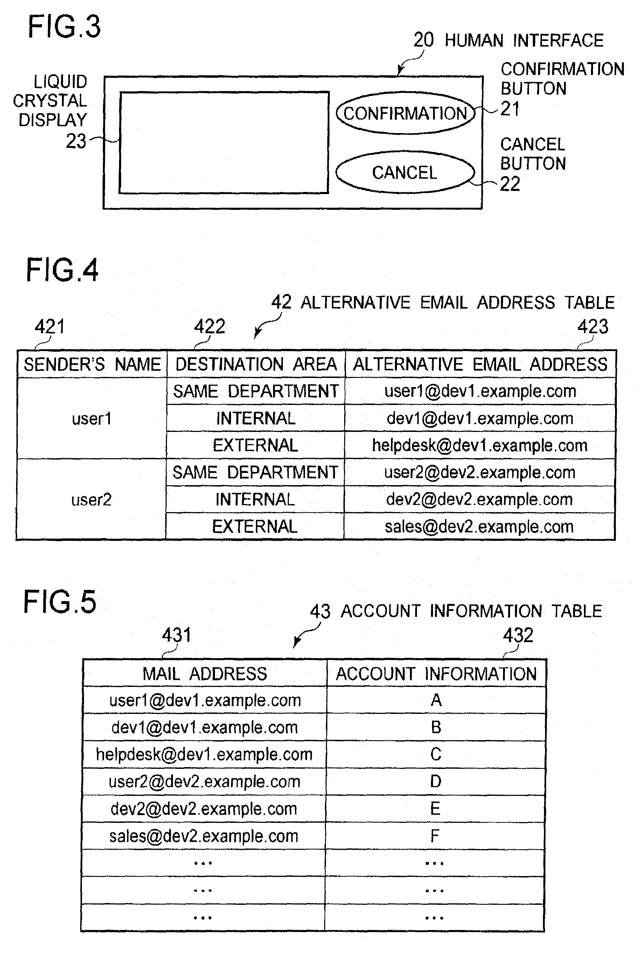

Fig. 3 illustrates the human interface 20.

The human interface 20 as an input section will be described with reference to Fig. 3. The human interface 20 includes a variety of buttons for inputting data and commands (only confirmation button 21 and cancel button 22 are shown) and a liquid crystal display 23 as a display/output section. The data and commands may be inputted through other inputting section via the communication section 30. The data and commands may be outputted through other outputting section and displayed on other displaying device.

When an email is sent, the user of the MFP 100 operates a variety of buttons on the human interface 20 to input information necessary for sending the email. The information may include the information that identifies the sender identifying information (e.g. user name), destination email address, sender's email address, the name of an attachment, and at least one of the subject and text of the email. The human interface 20 also displays the information that should be displayed from the MFP 100 to the sender.

### Communication Server

Referring back to Fig. 2, the communication section 30 is a communication interface through which the MFP 100 is connected to the network 112.

### Memory

The memory 40 stores an image storing section 41, an alternative email address table 42 and an account information table 43, and is implemented with a memory device such as a random access memory (RAM) or a flash memory.

### Image Storage Section

The image storing section 41 is a memory area that stores the image data of a document read with the image reading section 10. The image data stored in the image storing section 41 is used when a later described mail generating section 52 generates an email. The image storing section 41 may be an image memory separate from the memory 40.

### Alternative email address Table

Fig. 4 illustrates the alternative email address table 42. The configuration of the alternative email address table 42 will be described with reference to Fig. 4. The alternative email address table 42 includes three fields: a sender's name 421, a destination area 422, and an alternative email address 423. The sender's name 421 lists identification information of the user (i.e., user name) who is a sender of the email, and holds, for example, user1 and user2 which are the names of users. The user1 and user2 are employees of the company or organization that owes the MFP 100.

The destination area 422 lists the destinations to which the user1 and user2 send emails. Three destinations are assumed for each user: external destination, internal destination, and same department. A process in which a decision is made to determine to which destination an email should be sent will be described later together with a destination address determining section 54. The entries of the destination area 422 are not limited to external destination, internal destination, and same department but may include other destinations.

The alternative email address 423 includes alternative email addresses that correspond to the entries in the destination area 422. The alternative email address is used when the user listed in the sender's name 421 sends an email. For example, the user1 has three alternative email addresses for three different destination areas: user1@dev1.example.com for a destination in the same department, dev1@dev1.example.com for an internal destination, and helpdesk@dev1.example.com for an external destination.

### Account Information Table

Fig. 5 illustrates the account information table 43. The configuration of the account information table 43 will be described with reference to Fig. 5. The account information table 43 includes two fields: mail address 431 and account information 432. The mail address 431 holds mail addresses that are used as a source email address. Therefore, the mail address 431 includes the addresses of senders and the alternative email addresses in the alternative email address 423 of the alternative email address table 42. The account information 432 includes account information (e.g., user names and passwords) that corresponds to the mail address 431. When an email is sent from or received in the MFP 100, the account information is used to log in the mail server 101 (Fig. 1).

### Controller

Referring back to Fig. 2, the controller 50 includes a central processing unit (CPU) and peripheral circuits (not shown). The controller 50 further includes an image reading controller 51, a mail generating section 52, a source email address deciding section 53, and an email transmitting section 56. The source email address deciding section 53 includes the destination address determining section 54 and an alternative address obtaining section 55. The controller 50 reads a program (not shown) from the memory 40 into another memory (not shown) and executes the program.

### Image Reading Controller

The image reading controller 51 drives the image reading section 10 to read the image of a document. The image reading controller 51 receives electronic signals from the image reading section 10, then converts the electronic signals into image data, and stores the image data into the image storing section 41.

### Mail Generating Section

The mail generating section 52 generates an email based on the image data stored in the image storing section 41, destination email address received through the human interface 20, and the source email address determined by the source email address deciding section 53.

### Source Email Address Deciding Section

The source email address deciding section 53 selects an email address from among the destination email address received through the human interface 20 and the sender's mail address, the selected mail address being used as the source email address. The source email address deciding section 53 outputs the selected source email address to the mail generating section 52. The source email address is determined by the destination address determining section 54 and the alternative address obtaining section 55. This process will be described later.

If the source email address deciding section 53 sets a source email address different from the sender's mail address inputted by the sender through the human interface 20 or if the source email address deciding section 53 sets the sender's private email address as a source email address, then the source email address deciding section 53 outputs the information that requests the sender's approval to the human interface 20.

### Destination Address Determining Section

The destination address determining section 54 as a destination address determining section compares the destination email address, received through the human interface 20, with the mail address of the sender, received through the human interface 20. More specifically, the domain names following "@" of the two email addresses are compared. The destination address determining section 54 determines the destination of the email depending on which levels of domain of the two email addresses coincide.

In the first embodiment, "example" is employed as a second level domain. If the top domains of the two addresses do not coincide, the destination address determining section 54 determines that the destination area of the email is an external destination. Alternatively, if the top level domains of the two addresses coincide but the third level domains do not coincide, the destination address determining section 54 determines that the destination area of the email is an internal destination. Still alternatively, if the top level domains, second level domains, and third level domains coincide, the destination address determining section 54 determines that the destination area of the email is a destination within the same department.

However, the decision of the destination email address by the use of domain names is not limited to the aforementioned manner. For example, a decision may be made by the use of an organizational type JP domain name "co", in which case, if the second level domains of the two addresses do not coincide, it may be determined that the destination area is an external destination.

While the destination address determining section 54 determines the destination email address based on the domain names of the destination email address and the mail address of the sender, the destination email address may also be determined based on the information that identifies the company name, company code, department name, department code, factory name, or personal name.

### Alternative Address Obtaining Section

The alternative address obtaining section 55 searches the alternative email address table 42 using the sender's name (e.g., user1, user 2) of the email received through the human interface 20 and the destination email address (e. g. , external, internal, same department) determined by the destination address determining section 54, thereby obtaining an alternative email address from among the alternative email addresses held in the alternative email address table 42.

### Email transmitting Section

The email transmitting section 56 searches the account information table 43 using the mail address in the source email address as a search keyword, thereby obtaining account information from the account information 432 and connects to the mail server 101 based on the obtained account information. Once the email transmitting section 56 is connected to the mail server 101, the email transmitting section 56 transmits the email generated by the mail generating section 52 to the mail server 101. The transmission of the email is performed according to a protocol such as simple mail transfer protocol (SMTP).

### Image Forming Section

The image forming section 70 is configured to print the image data of a document read by the image reading section 10. The image forming section 70 includes an exposing section, a developing section, a transfer roller, and a fixing section. The exposing section illuminates the charged surface of a photoconductive drum in accordance with print data to form an electrostatic latent image. The developing section develops the electrostatic latent image into a developer image. The transfer roller transfers the developer image onto recording paper. The fixing unit fixes the developer image on the recording paper under pressure and heat.

### Operation of MFP

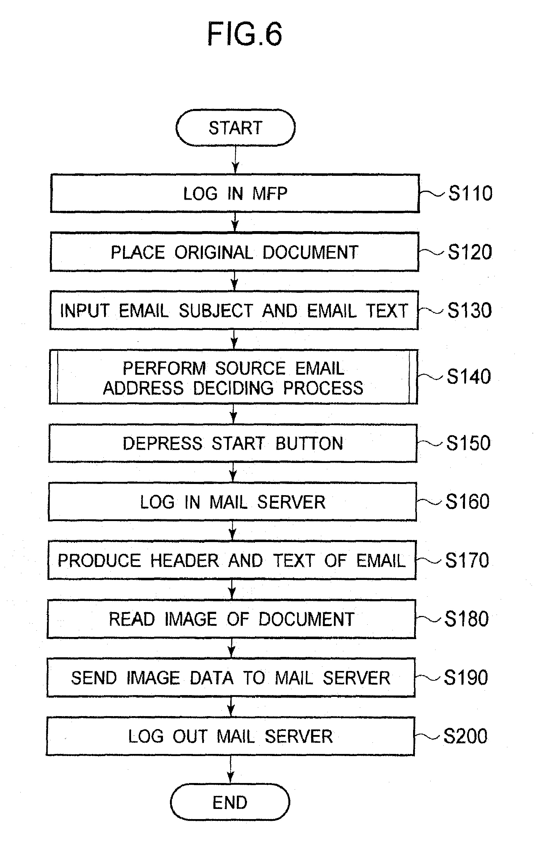

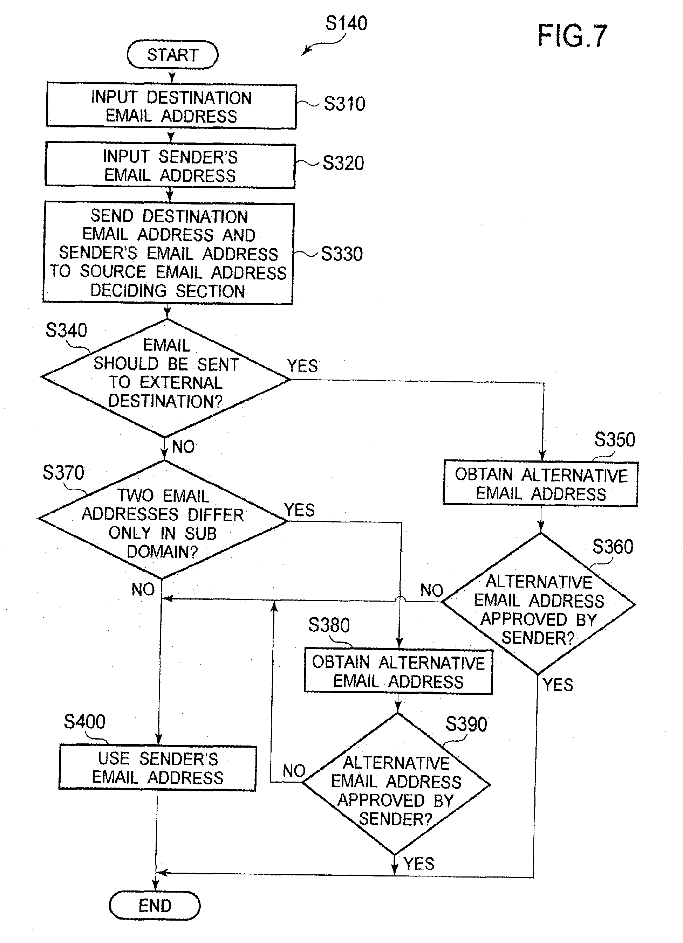

With reference to Figs. 6 and 7, a description will be given of the operation of the Scan-to-Email function by which the image read by the image reading section 10 of the MFP 100 is sent as an attachment together with an email. Fig. 6 is a flowchart illustrating the email transmission process performed by the MFP 100. Fig. 7 is a flowchart illustrating the source email address deciding process performed by the MFP 100,

The source email address deciding process shown in Fig. 7 includes three cases: the first is that the destination area of email is "external" in which the user 1 sends the email to the user3, the second is that the destination area is "internal" in which the user1 sends the email to the user2, and the third is that the destination area is a destination in the same department in which the user1 sends the email to himself.

The operation of the MFP 100 when an email is transmitted will be described with reference to Fig. 6. For example, the user1 operates the human interface 20 to log in the MFP 100 that serves as an information processing apparatus (S110). The user1 may log in the MFP 100 in a variety of ways. For example, the user1 may input a user name and a password assigned to the user1. The MFP 100 is equipped with an IC card reader as an authentication medium reader, and the user1 may hold an IC card against the IC reader, which holds, for example, user information therein, thereby performing log-in authentication.

The user1 then places the original document on the image reading section 10 (S120). The user1 then operates the human interface 20 to input an email subject and an email body for the email (S130). The user1, who is the sender, may select the email subject and email body from among the standard phrases stored in the MFP 100.

The source email address deciding section 53 performs the source email address deciding process (S140). With reference to Fig. 7, the detail of the source email address deciding process will be described in terms of three destinations: external destination, internal destination, and destination within the same department.

### Emails to Be Sent to External Destination

The source email address deciding section 53 waits until the destination email address and sender's mail address are input through the human interface 20. As shown in Fig. 7, the user1 (sender of email) operates the human interface 20 to input user3@mail.example.org as a destination email address (S310). Subsequently, the user1 operates the human interface 20 to input user1@dev1.example.com as a sender's email address (S320).

The human interface 20 then directs the user3@mail.example.org and user1@dev1.example.com to the source email address deciding section 53 (S330).

The destination address determining section 54 compares the domain names after the "@" sign of these two addresses to determine whether the email is to be sent to an external destination (S340). The top level domain of the destination email address is "org" and the top level domain of the sender's address is "com. " Since the top level domains do not coincide, the destination address determining section 54 determines that the mail is to be sent to an external destination (YES at S340) . The program then proceeds to S350.

If the answer is YES at S340, then the alternative address obtaining section 55 searches the alternative email address table 42 (Fig. 4) using the sender's name (e.g., user1) of the email and the destination area (e.g., external), thereby obtaining an alternative email address helpdesk@dev1.example.com (S350).

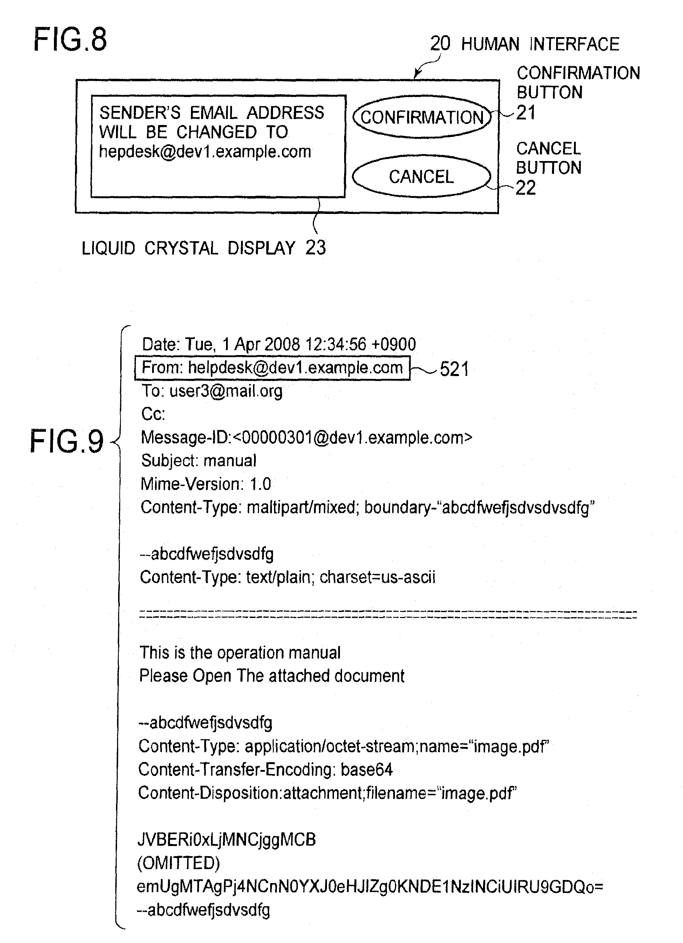

The source email address deciding section 53 then causes the liquid crystal display 23 to display information asking the user1 to confirm that helpdesk@dev1.example.com may be used in place of user1@dev1.example.com. This prompts the user1 to make a decision whether the user1 agrees to use helpdesk@dev1.example.com in place of user1@dev1.example.com (S360). Fig. 8 illustrates an example of the information displayed on the liquid crystal display 23.

If the user1 depresses the confirmation button 21 to agree to use helpdesk@dev1.example.com in place of user1@dev1.example.com (YES at S360), then the source email address deciding section 53 directs the alternative email helpdesk@dev1.example.com to the mail generating section 52 (S400). The program then proceeds to S150 (Fig. 6).

If the answer is NO at S360, the source email address deciding section 53 sends the sender's mail address user1@dev1.example.com inputted at S320 to the mail generating section 52 (S400). The program then proceeds to S150 (Fig. 6)

### Emails to Be Sent to Internal Destination

As shown in Fig. 7, the user1 operates the human interface 20 to input user2@dev2.example.com as a destination email address (S310). Subsequently, the user1 operates the human interface 20 to input user1@dev1.example.com as an email address of a sender (S320).

The human interface 20 then directs the user2@dev2.example.com and user1@dev1.example.com to the source email address deciding section 53 (S330). In this manner, the source email address deciding section 53 obtains the destination email address and the mail address of a sender.

The destination address determining section 54 compares the domain names after the "@" sign of these two addresses to determine whether the email is to be sent to an external destination (S340). The top level domain of the destination email address and the top level domain of the sender's address are both "com. " In addition, the second level domains of these two email addresses are "example." Since the top level domains coincide and the second level domains coincide, the destination address determining section 54 determines that the mail is not to be sent to an external (NO at S340). The program proceeds to S370.

If the answer NO at S340, the destination address determining section 54 compares the two email addresses, user2@dev2.example.com and user1@dev1.example.com, to determine whether the two email addresses differ from each other only in sub domain name (S370) . The destination email address has the third level domain "dev2" and the mail address of a sender has the third level domain "dev1". Since the two email addresses differ in third level domain, the destination address determining section 54 determines that the email is to be sent to an internal destination (YES at S370). The program then proceeds to S380.

If the answer is YES at S370, the alternative address obtaining section 55 searches the alternative email address table 42 using the sender's name (i. e. user1) of the email and the destination area (i.e., internal), thereby obtaining an alternative email address dev1@dev1.example.com (S380).

The source email address deciding section 53 then causes the liquid crystal display 23 to display information prompting the user1 to confirm that dev1@dev1.example.com may be used in place of user1@dev1.example.com. This prompts the user1 to make a decision whether the user1 agrees to use dev1@dev1.example.com in place of user1@dev1.example.com (S390).

If the user1 depresses the confirmation button 21 to agree to use dev1@dev1.example.com in place of user1@dev1.example.com (YES at S390), the source email address deciding section 53 directs the alternative email address dev1@dev1.example.comm to the mail generating section 52. The program then proceeds to S150. If the user1 depresses the cancellation button 22 not to agree to use dev1@dev1.example.com in place of user1@dev1.example.com (NO at S390). The program then proceeds to S400.

If the answer is NO at S390, the source email address deciding section 53 directs the email address of the sender user1@dev1.example.com to the mail generating section 52 (S400) . The program then proceeds to S150 (Fig. 6).

### Emails to Be Sent to Same Department

As shown in Fig. 7, the user1 operates the human interface 20 to input user2@dev2.example.com as a destination email address (S310). Subsequently, the user1 operates the human interface 20 to input user1@dev1.example.com as the mail address of a sender (S320).

The human interface 20 then directs the user1@dev1.example.com as the destination address and user1@dev1.example.com as the email address of the sender to the source email address deciding section 53 (S330). In this manner, the source email address deciding section 53 obtains both the destination email address and the mail address of the sender.

The destination address determining section 54 compares the domain names after the "@" sign of these two addresses to determine whether the email is to be sent to an external destination (S340). The top level domain of the destination email address and the top level domain of the sender's address are both "com. " In addition, the second level domains of these two email addresses are "example." Since the top level domains coincide and the second level domains coincide, the destination address determining section 54 determines that the mail is not to be sent to an external destination (NO at S340). The program then proceeds to S370.

If the answer is NO at S340, the destination address determining section 54 compares the two email addresses, user1@dev1.example.com and user1@dev1.example.com, to determine whether the two email addresses differ from each other in sub domain name (S370). The destination email address has the third level domain "dev1" and the mail address of a sender has the third level domain "dev1". Since the two email addresses coincide in third level domain, the destination address determining section 54 determines that the email is to be sent to the same department (NO at S370). The program then proceeds to S400.

If the answer is NO at 370, the source email address deciding section 53 directs the user1@dev1.example.com inputted at S320 to the mail generating section 52 (S400) . The program proceeds to S150 (Fig. 6).

At S400, the alternative address obtaining section 55 searches the alternative email address table 42 using the destination area (i.e., internal) as a search keyword, thereby obtaining an alternative email address dev1@dev1.example.com (S380).

In the first embodiment, the mail address of the user1 is inputted at S320 (Fig. 7). The first embodiment may be modified as follows: The source email address deciding section 53 may search the alternative email address table 42 (Fig. 4) using the user information inputted by the user through the human interface 20 when the user logs in the MFP 100. Further, the alternative email address for the external destination held in the alternative email address 423 of the alternative email address table 42 may be used in place of the mail address inputted at S320 (Fig. 7). The operation at steps after S320 is the same as the first embodiment.

In the aforementioned modification, the mail address held in the memory 40 is used, and therefore the user is freed from the operation for inputting the mail address of the sender every time he sends an email. This simplifies the inputting operation through the human interface 20.

Referring back to Fig. 6, a description will be given of the operation of the MFP 100 in terms of the steps after S150 during the email transmission process. When the answers at S360 and S390 are YES or when the operation at S400 is completed, the user1 depresses a start button (not shown) on the human interface 20 to start the email transmission process (S150).

The email transmitting section 56 of the MFP 100 searches the account information table 43 to obtain account information corresponding to the source email address determined at S140, and then logs in the mail server 101 using the obtained account information (S160).

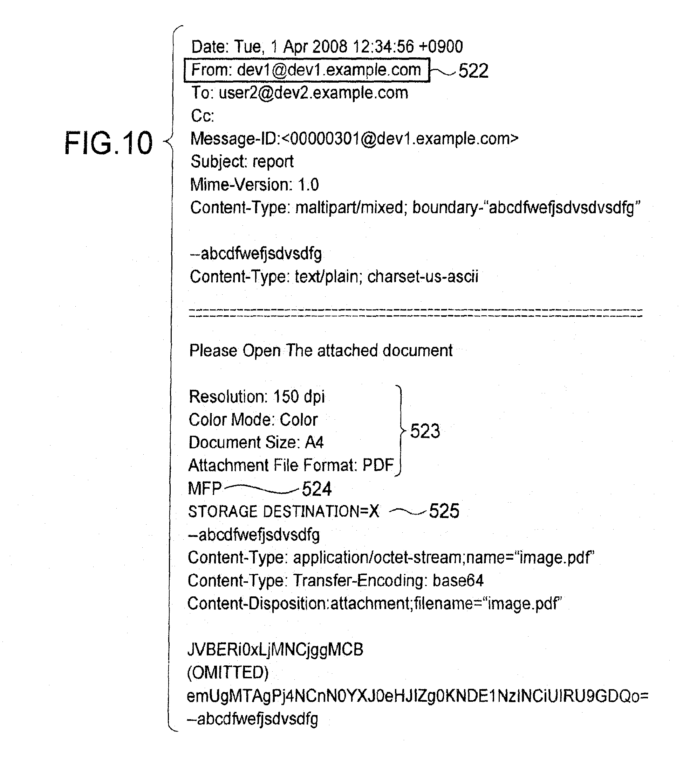

The mail generating section 52 produces the header and text of an email based on the information inputted at S130 and the information determined at S140 (S170). Figs. 9 and 10 illustrate examples of emails thus produced by the mail generating section 52.

Fig. 9 illustrates an email to be sent to an external destination. It is to be noted that the source email address (From:) has been changed from user1@dev1.example.com to helpdesk@dev1.example.com. The destination (To:)is user3@mail.example.org. This email has a PDF file as an attachment having a file name "image.pdf". Fig. 9 illustrates the email with the image data of the PDF partially omitted.

Fig. 10 illustrates an email to be sent to an internal destination. It is to be noted that the source email address (From:) has been changed from user1@dev1.example.com to dev1@dev1.example.com. The destination (To:) is user2@dev2.example.org. This email has a PDF file as an attachment with a file name "image.pdf". Fig. 10 illustrates the email having the image data of the PDF partially omitted.

The content of the email text shown in Figs. 9 and 10 may be changed depending on the destination email address to which the email is sent. For example, the email text may be stored in the memory 40 in advance in accordance with the destination email addresses, so that the mail generating section 52 alters the content of the email text based on the determination made by the destination address determining section 54.

Specifically, if an email is to be sent to an internal destination, the mail generating section 52 produces an email text to which the MFP information (524 shown in Fig. 10), storage destination information (525 shown in Fig. 10), and document reading conditions (523 shown in Fig. 10) are added. This enables the email recipient to directly obtain an image from the MFP by using the MFP information 524, storage destination information 525, and document reading conditions 523, if the email recipient wants to receive the image in a desired data format. If an email is to be sent to an external destination, the mail generating section 52 produces an email text not having the MFP information 524, storage destination information 525, and document reading conditions 523 since these items of information need not be shown to the recipient.

Next, the image reading controller 51 of the MFP 100 drives the image reading section 10 to operate for converting an image of a document into image data (S180) . The image data read via the image reading section 10 is stored into the image storing section 41. The mail generating section 52 converts the image data stored in the image storing section 41 into multipurpose Internet mail extension (MIME) format that is to be transmitted by email.

Next, the email transmitting section 56 sends the image data obtained at S180 and the message produced at S170 to the mail server 101 via the network 112 (S190). Upon completion of transmission of the image data and the data required for sending an email to the mail server 101, the email transmitting section 56 logs out of the mail server 101 and is then disconnected from the network (S200).

As described above, the MFP 100 according to the first embodiment is configured such that the source email address for an email is determined based on the determination made by the destination address determining section 54. This eliminates the chance of a sender sending his private mail address inadvertently to the recipient to whom the sender' s private mail address should not be disclosed, thereby improving security.

As described above, the MFP 100 according to the first embodiment is configured as follows: That is, if the source email address deciding section 53 decides, based on the determination made by the destination address determining section 54, that an alternative mail address should be used in place of the sender's address, the source email address deciding section 53 then causes the liquid crystal display 23 to display information prompting the user1 to check whether the sender's email address which is a private email address, may be disclosed to the recipient. This provides the sender with a chance to decide whether his private email address is used as a source email address.

In addition, the MFP 100 according to the first embodiment is configured such that the email transmitting section 56 searches the account information table 43 to obtain account information corresponding to the source email address determined at S140, and then logs in the mail server 101 using the account information. Therefore, when an email is sent, if an alternative email address is determined as a sender's mail address after the email transmitting section 56 has logged in using the sender's mail address, the email transmitting section 56 need not log in the mail server 101 again.

The present invention is not limited to the aforementioned first embodiment and the first embodiment can be modified in a variety of ways without departing the scope of the invention.

### Modification #1

The alternative address for the MFP 100, which is used in place of the source email address (i.e., the sender's mail address), is a representative mail address that represents the company or the department. Therefore, the recipient of the email cannot tell who is the sender of the mail. The MFP 100A according to the modification #1 is configured to add the sender's name to the email text if an alternative email address is used as a source email address.

### Configuration of MFP According to Modification #1

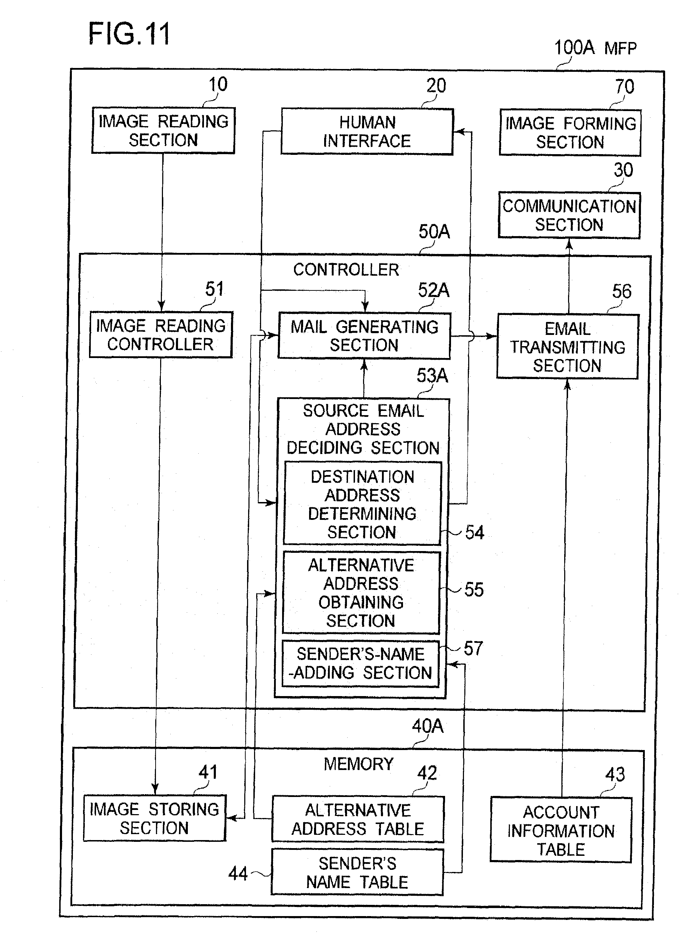

Fig. 11 illustrates the configuration of the MFP 100A. The configuration of MFP 100A will be described with reference to Fig. 11. The MFP 100A differs from the MFP 100 in that a memory 40A includes a sender's name table 44, a source email address deciding section 53A includes a sender's-name-adding section 57, and a mail generating section 52A has additional functions. The respective portions of the MFP 100A will be described.

### Sender's Name Table

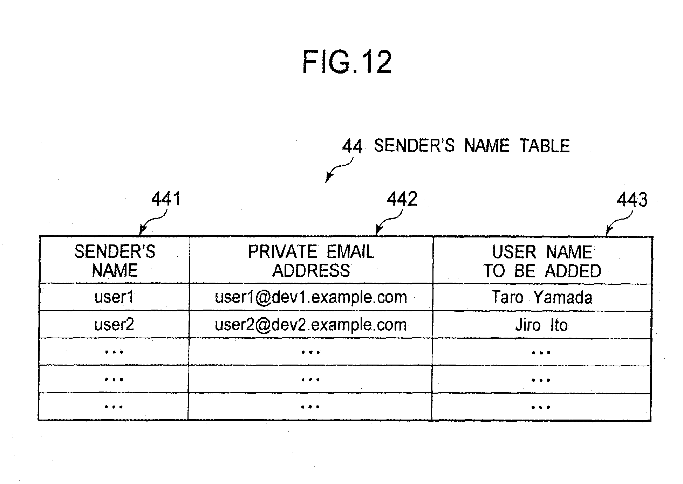

Fig. 12 illustrates the sender's name table 44. The configuration of the sender's name table 44 will be described with reference to Fig. 12. The sender's name table 44 includes three fields: sender's name 441, private email address 442, and user name to be added 443. The sender's name 441 holds user identification information (i.e., sender's name) who is a sender of an email. For example, Fig. 12 illustrates user1 and user2 which are the names of users who belong to a company that owes the MFP 100A.

The private email address 442 holds mail addresses assigned to the respective users. For example, the user1 is assigned an email address user1@dev1.example.com and the user2 is assigned an email address user2@dev2.example.com. The user name to be added 443 holds the name of a user that is added to the email text when an alternative email address is used as a source email address. For example, the user1 has the name "Jack Smith" and the user2 has the name "George Johnson."

### Sender's-Name-Adding Section

The sender's-name-adding section 57 sets a sender flag (not shown) to ON if an alternative email address is used as a source email address (i.e., if the mail address of a sender is not set as the source email address). The sender's-name-adding section 57 sets a sender flag to OFF if the sender's email address is set as a source email address.

### Mail Generating Section

When generating an email, if the sender flag is ON, the mail generating section 52A searches the sender's name table 44 using the sender's name or the email address inputted through the human interface 20, thereby obtaining a corresponding name of a user from the user name to be added 443. The mail generating section 52A then adds the obtained name of the user to the text of the email.

### Operation of MFP 100A

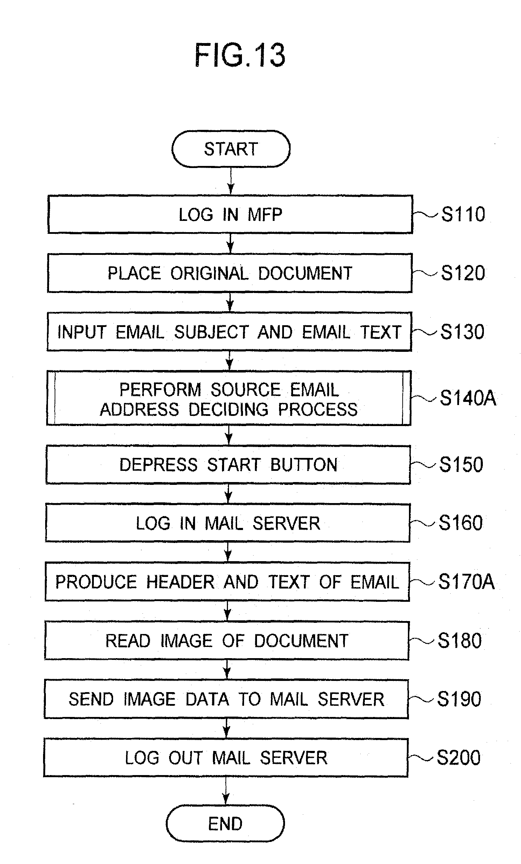

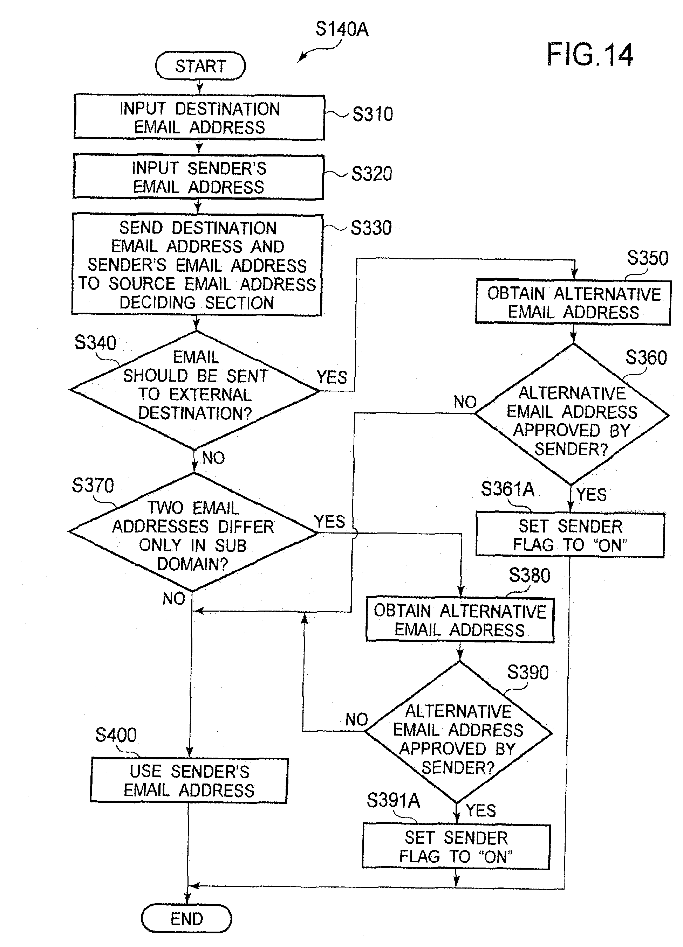

With reference to Figs. 13 and 14, a description will be given of the operation of a Scan-to-Email function in which the image read with the image reading section 10 of the MFP 100A is added as an attachment to an email before sending the email. Fig. 13 is a flowchart illustrating the email transmission process performed by the MFP 100A. Fig. 14 is a flowchart illustrating the source email address deciding process performed by the MFP 100A. The description will be given only of a portion different from the first embodiment, and the description of the other portions is omitted.

Referring to Fig. 13, the source email address deciding section 53A performs the source email address deciding process (S140A). Fig. 14 illustrates the detail of the source email address deciding process.

Referring to Fig. 14, if the answer is YES at S360, the serzder's-name-adding section 57 sets the sender flag to ON (S361A). The program then proceeds to S150. If the answer is YES at S390, the sender' s-name-adding section 57 sets the sender flag to ON (S391A). The program then proceeds to S150.

Referring back to Fig. 13, the operation of S160 onward will be described.

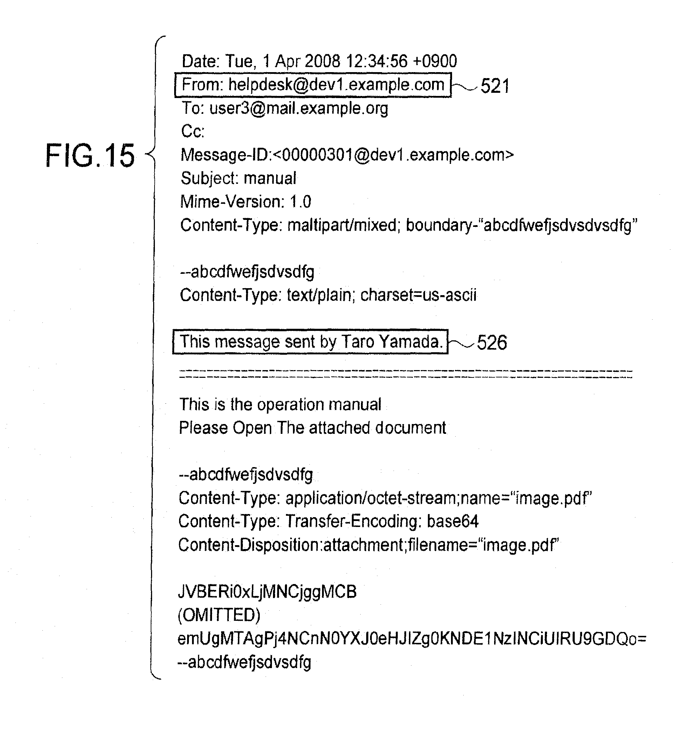

The mail generating section 52A generates messages including the header and text of an email based on the information inputted at S130 or the information determined at S140A (S170A). If the sender flag is ON, the mail generating section 52A searches the sender's name table 44 using the sender's name or the email address inputted through the human interface 20, thereby obtaining a corresponding name of a user from the user name to be added 443 (Fig. 12). The mail generating section then adds the obtained name of the user to the text of the email. Fig. 15 illustrates an example of such an email.

Fig. 15 illustrates an email when sender information is added to the email shown in Fig. 9. The source email address (From:) has been changed from the source email address user1@dev1.example.com to helpdesk@dev1.example.com. It is to be noted that the name of a user "Jack Smith", denoted at 526 in Fig. 15, has been added.

As described above, the MFP 100A is configured such that if the source email address (From:) depicted at 521 in the mail header is not a private email address, the name of the user is inserted into the email text so that the recipient can tell who is the sender of the email.

In the first embodiment, the mail generating section 52A searches the sender's name table 44 using the email address inputted at S320 through the human interface 20, thereby adding the user name to be added 443 to the email text. The first embodiment may be modified such that when the user operates the human interface 20 to log in the MFP 100A as an information processing apparatus, the mail generating section 52 searches the sender's name table 44 using the email address inputted at S110 (Fig. 13) through the human interface 20, thereby identifying the user name to be added 443 so that the mail generating section 52A can add the user name to be added 443 to the email text. In this case, the procedure for inputting the email address at S320 may be omitted.

### Modification #2

The MFP 100 of the first embodiment is configured such that after the source email address has been determined, an email transmitting section 56B searches an account information table 43 to obtain account information corresponding to the alternative email address determined at S140, and then logs in the mail server 101 using the account information. In contrast, the MFP 100B of the modification #2 is configured such that log-in information (default account information) used for logging in the mail server 101 is stored in an account information table 43B in advance.

### Configuration of MFP 100B according to of Modification #2

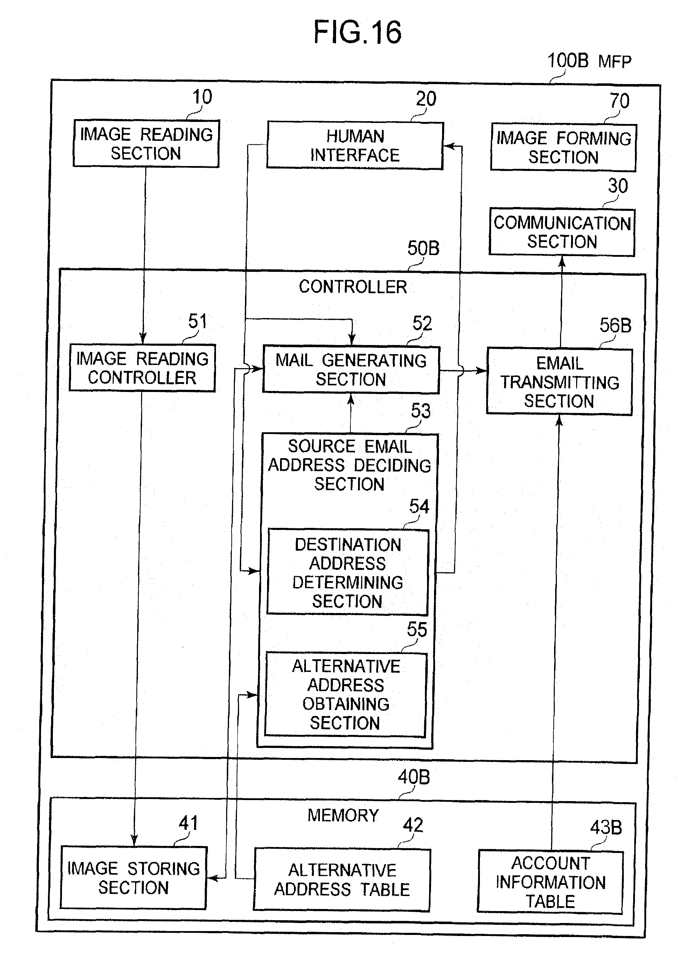

Fig. 16 illustrates the configuration of the MFP 100B as an information processing apparatus according to the modification #2. The configuration of the MFP 100B will be described with reference to Fig. 16. The MFP 100B differs from the MFP 100 in that the account information 43B contains the default account information and the email transmitting section 56B has different functions from the email transmitting section 56.

The account information table 43B stores, in addition to the content shown in Fig. 5, the log-in information (default account information, not shown) used for logging in the mail server 101. The log-in information is stored in the account information table 43B in advance. The default account information is, for example, account information "C" (corresponding to helpdesk@dev1.example.com for an external destination) shown in the account information 432 of Fig. 5.

### Email Transmitting Section

Once the user has logged in the MFP 100B, the email transmitting section 56B searches the account information table 43B to obtain the default account information, and then logs in the mail server 101 using the obtained default account information. If an email needs to be sent using account information different from the default account information used for logging in, the email transmitting section 56B searches the account information table 43B to obtain another account information, and then re-logs in the mail server 101 using the obtained another account information.

The specific process performed by the email transmitting section 56B will be described below. For example, the email address helpdesk@dev1.example.com may be used as a source email address when an email is to be sent to an external destination. Assume that the default account information is the "C" held in the account information 432 (Fig. 5) corresponding to the email address helpdesk@dev1.example.com, and is used to send an email to an external destination. Thus, the email transmitting section 56B generates the email text, and sends the email without having to re-log in the mail server. If the email is to be sent to either an internal destination or a destination within the same department, the email transmitting section 56B uses user1@dev1.example.com or dev1@dev1.example.com as a source email address. Therefore, the email transmitting section 56B re-logs in the mail server 101 using the account information "B" or "A" obtained from the account information table 43B.

### The operation of MFP of Modification #2

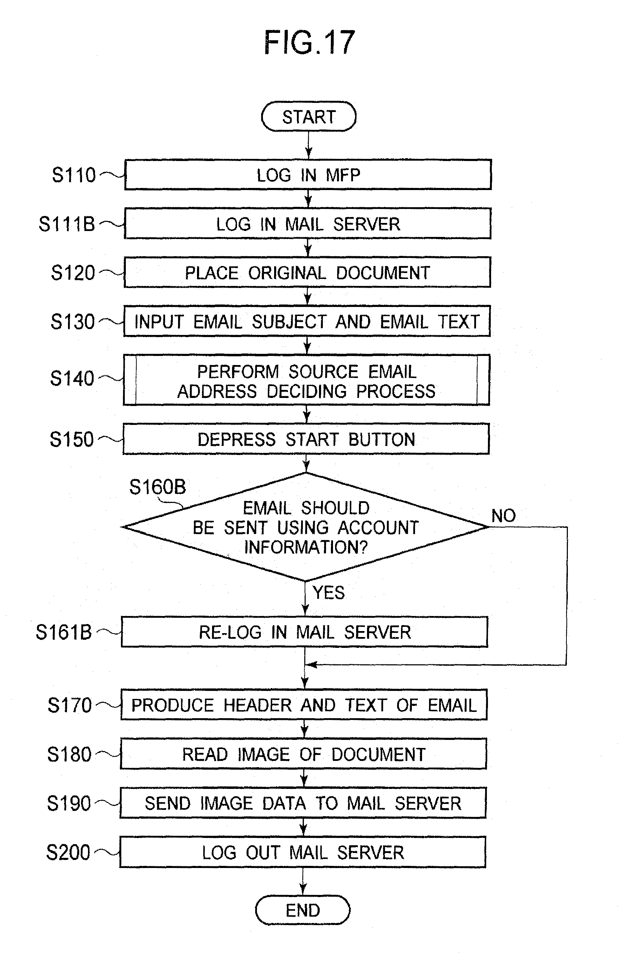

With reference to Fig. 17, a description will be given of the operation of the Scan-to-Email function in which the image read with the image reading section 10 of the MFP 100B is added as an attachment to an email before sending the email. Fig. 17 is a flowchart illustrating the email transmission process performed by the MFP 100B. The description will be given only of a portion different from the first embodiment and the description of the other portions is omitted.

As shown in Fig. 17, following S110, the email transmitting section 56B of the MFP 100B searches the account information table 43B to obtain the default account information, and then logs in the mail server 101 using the obtained default account information (S111B).

Following S150, the email transmitting section 56B makes a decision to determine whether an email needs to be sent using the account information used for log-in which is different from the default account information (S160B). If an email is to be sent using the default account information used in logging in (NO at S160B), the program proceeds to S161B. If an email is to be sent using the account information different from the default account information (YES at S160B), then the program proceeds to S170.

If the answer is YES at S160B, the email transmitting section 56B searches the account information table 43B to obtain another account information, and again logs in the mail server 101 using the another account information (S161B).

As described above, the MFP 100B according to the modification #2 is configured such that the default account information is stored in the MFP 100B in advance, and that when the user logs in the MFP 100B using the default account information, the email transmitting section 56B logs in the mail server 101 using the default account information. Therefore, if emails are frequently sent to a particular recipient, the procedure for sending emails can be efficient.

### Modification #3

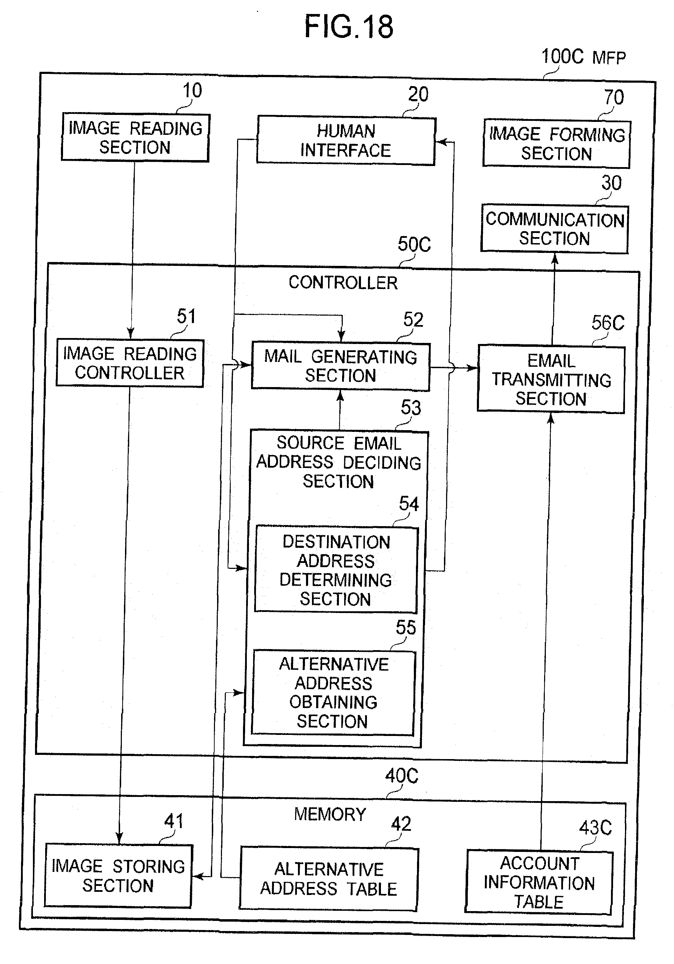

In the MFP 100 according to the first embodiment, an item of account information corresponds to an email address. In an MFP 100C according to a modification #3, an item of account information corresponds to a plurality of emails. This configuration eliminates the need for having the account information table 43 (Fig. 2) that contains a plurality of items of account information but only the account information "C" (Fig. 18) needs to be stored, so that an email can be sent using one of the plurality of source email addresses that can be selected via one account.

### Configuration of MFP according to Modification #3

The configuration of the MFP 100C according to the modification #3 will be described with reference to Fig. 18. Fig. 18 illustrates the MFP 100C as an information processing apparatus according to the modification #3. The MFP 100C differs from the MFP 100 in that a memory 40C includes an account information 43C and an email transmitting section 56C has additional functions. Thus, an email can be sent using one of a plurality of source email addresses via one account. The respective sections of the MFP 100C will be described as follows:

### Account Information

The account information "C" enables selecting of one of a plurality of source email addresses via one account.

### Email Transmitting Section

Once the user has logged in the MFP 100C, the email transmitting section 56C obtains the account information 43C, and then logs in the email server 101 using the obtained account information 43C.

### Operation of MFP according to modification #3

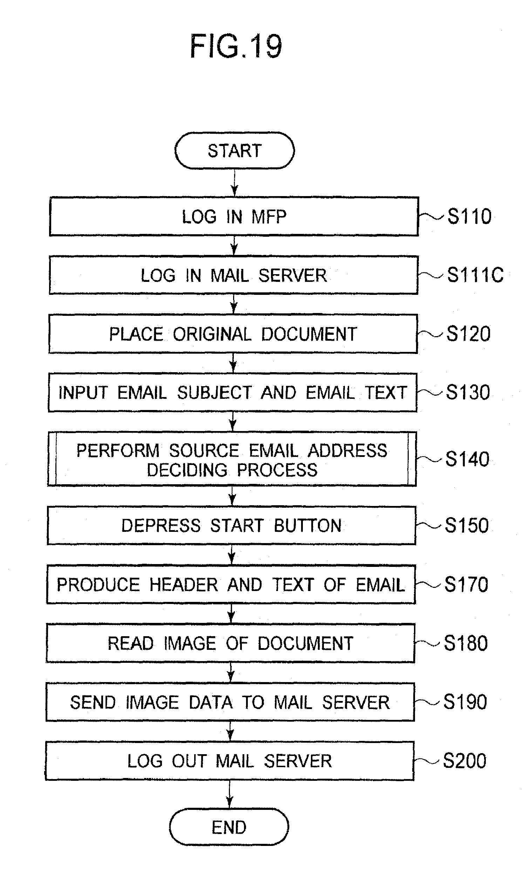

Fig. 19 is a flowchart illustrating the email transmission process performed by the MFP 100C. With reference to Figs. 19, a description will be given of the operation of the Scan-to-Email function in which the image read with the image reading section 10 of the MFP 100C is added as an attachment to an email before sending the email. The description will be given only of a portion different from the first embodiment, and the description of the other portions is omitted.

Referring to Fig. 19, following S110, the email transmitting section 56C obtains the account information 43C and then logs in the mail server 101 using the obtained account information 43C (S111C). The mail generating section 52 generates the header and message such as text for the email using the source email address determined at S140.

As described above, the MFP 100C is configured such that the memory 40 contains the account information 43C that enables selecting of one source email address from among a plurality of source email addresses via the account information 43C. This configuration eliminates the need for having an account information table 43 and the need for logging in the mail server 101 for each source email address.

### Modification #4

In the MFP 100A (Fig. 11) of the modification #1, a decision is made to determine whether an email is to be sent to an external destination, an internal destination, or a destination within the same department. The source email address for the email is then determined in accordance with the decision. If the source email address is to be changed from the email address of a sender, the MFP 100A informs the user of the changed source email address. In contrast, an MFP 100D according to a modification #4 is configured such that if only a private mail address has been set as a source email address, the user is prompted to determine whether the private mail address may be used as a source email address together with the email. This enables the sender to decide, depending on the destination of the email, whether the private mail address should be used as a source email address together with the email.

### Configuration of MFP according to Modification #4

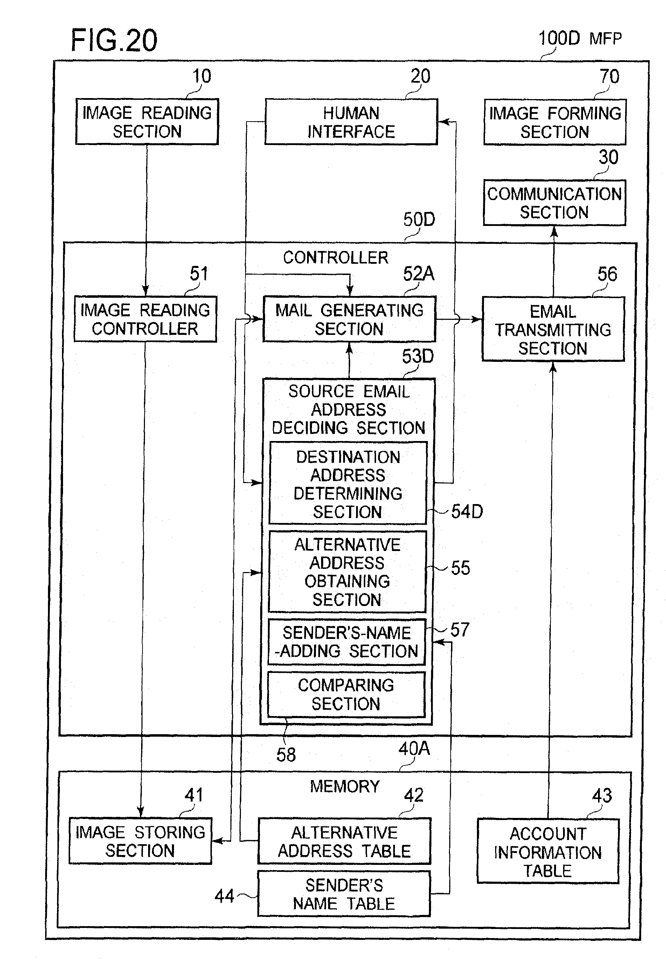

Fig. 20 illustrates the configuration of the MFP 100D as an information processing apparatus according to modification #4. The configuration of the MFP 100D will be described with reference to Fig. 20. The MFP 100D differs from the MFP 100A in that a source email address deciding section 53D has a comparing section 58 and a destination address determining section 54D has additional functions. The respective sections of the MFP 100D will be described below.

### Comparing Section

The comparing section 58 identifies the name of a log-in user from the user's name who logged in the MFP 100D. The comparing section 58 then compares the private email address 442 corresponding to the user's name held in the sender's name table 44 (Fig. 12) with an alternative email address in the alternative email address 423 corresponding to the user's name held in the alternative email address table 42 (Fig. 4} , thereby determining whether the alternative email address 423 of the alternative email address table 42 holds only the private email address of the user.

### Destination Address Determining Section

If the comparing section 58 determines that the alternative email address 423 holds only the private email address of the user, then the destination address determining section 54D causes the liquid crystal display 23 (Fig. 3) to display, depending on the destination of the email, a screen via which the user is prompted to determine whether the private mail address may be used as a source email address together with the email. In response to the screen, the sender operates the human interface 20 to command whether the private email address may be used as a source email address together with the email.

### Operation of MFP According to Modification #4

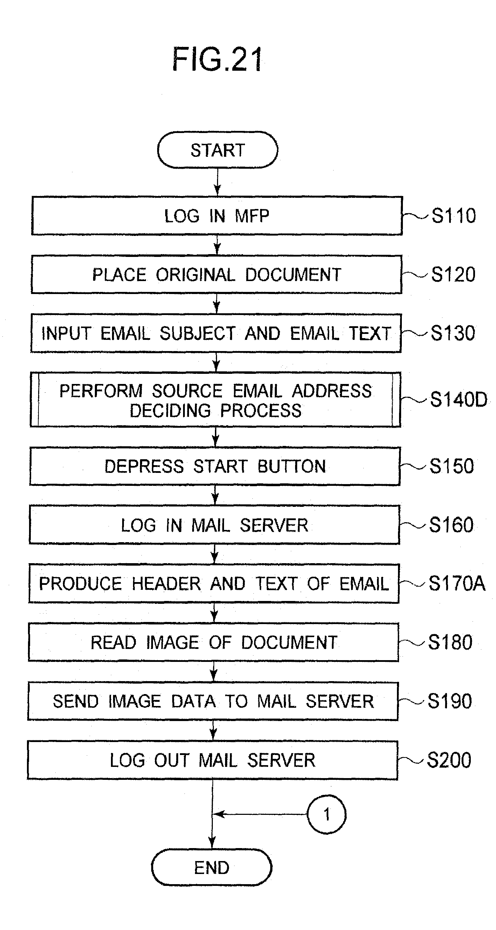

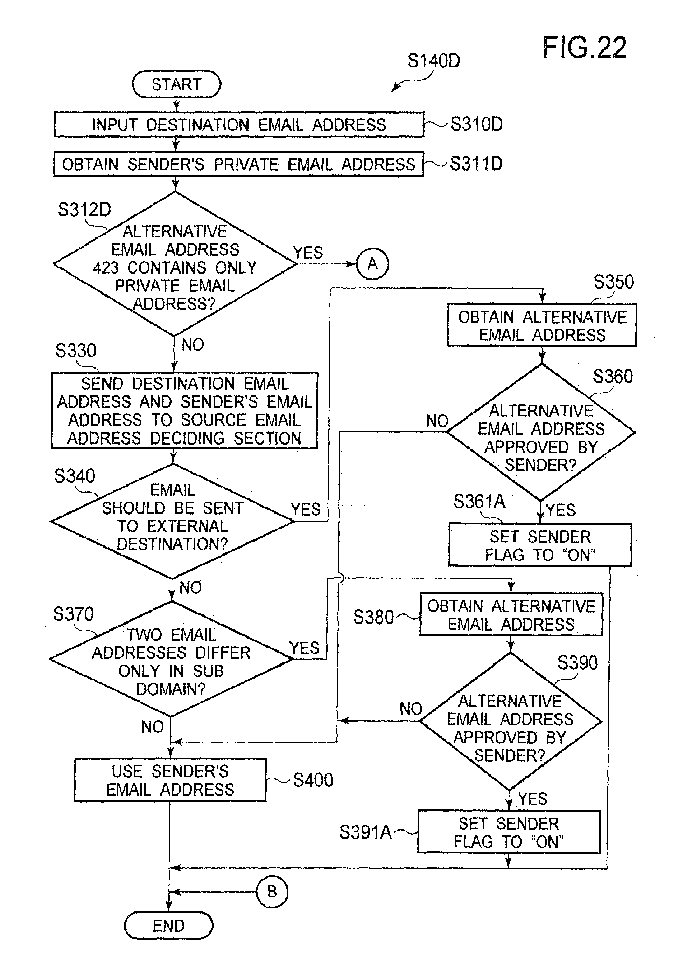

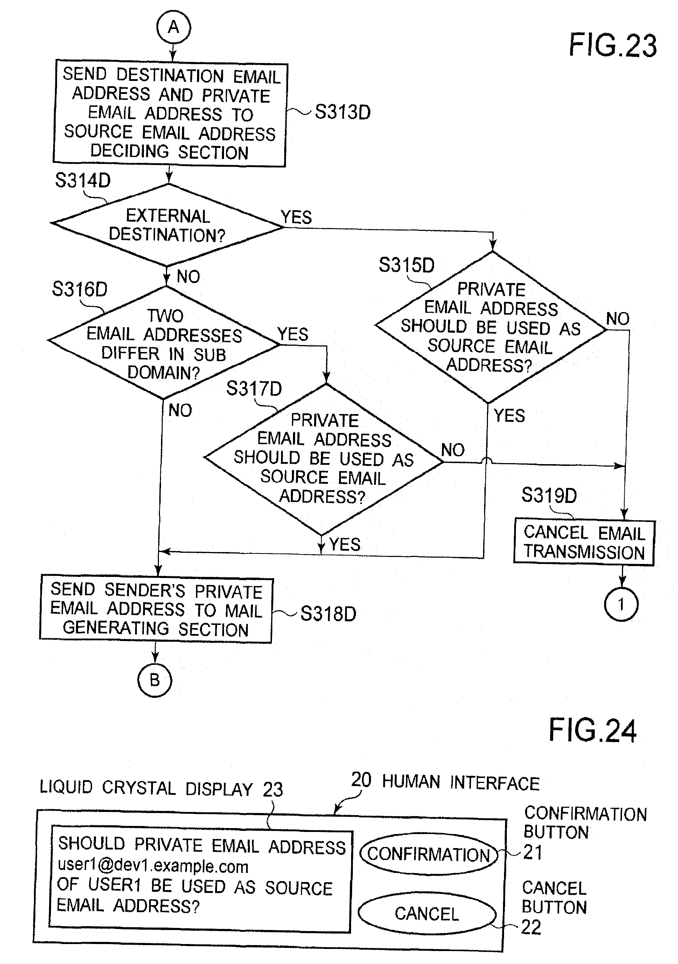

Fig. 21 is a flowchart illustrating the email transmission sending process performed by the MFP 100D. Fig. 22 and Fig. 23 are flowcharts illustrating the source email address deciding process performed by the MFP 100D. With reference to Figs. 21-23, a description will be given of the operation of the Scan-to-Email function in which the image read with the image reading section 10 of the MFP 100D is added as an attachment to an email before sending the email. The description will be given only of a portion different from the first embodiment, and the description of the other portions is omitted.

As shown in Fig. 21, following S130, the source email address deciding section 53D of the MFP 100D performs the source email address deciding process (S140D). Fig. 22 illustrates the detail of S140D.

As shown in Fig. 22, the sender of the email operates the human interface 20 to input the destination email address ( 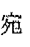 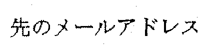 ), thereby specifying the destination of the email (S310D). Alternatively, the destination of emails may be stored in the memory 40A of the MFP 100D in advance and the sender of an email may select his desired email address from the memory 40A.

Subsequently, the comparing section 58 searches the sender's name table 44 (Fig. 12) using the user's name (sender's name) of the sender inputted at S110 (Fig. 21) when the user logs in, thereby obtaining the private email address 442 of the sender (S311D).

Next, the comparing section 58 compares the private email address 442 (Fig. 12) obtained at S311D with the alternative email address 423, thereby determining whether the alternative email address 423 contains only the private email address 442 (S312D). If the alternative email address 423 contains only the private email address 442, (YES at S312D), the program proceeds to S313D (Fig. 23). If the alternative email address 423 contains email addresses other than the private email address 442 (NO at S312D), the program proceeds to S330D.

If the answer is YES at S312D, the destination email address inputted at S310D and the private email address 442 (as the sender's email address obtained at S311D are sent to the source email address deciding section 53D (S313D), so that the source email address deciding section 53D obtains the destination email address and the sender's email address.

The destination address determining section 54D compares the domain following the "@" sign of the destination email address and the domain following the "@" sign of the sender's email address, thereby determining whether the email is to be sent to an external destination (S314D). S314D performs the same process as S340. If the email is to be sent to an external destination (YES at S314D), the program proceeds to S315D. If the email is not to be sent to an external destination (NO at S314D), the program proceeds to S316D.

If the answer is YES at S314D, the destination address determining section 54D causes the liquid crystal display 23 to display a message that prompts the user to decide whether the private email address 442 should be used as a source email address for sending an email (S315D) . Fig. 24 illustrates an example of the message displayed at S315D.

The sender of the email depresses the confirmation button 21 to agree that the private email address 442 is used as a source email address for sending an email (YES at S315D), the program then proceeds to S318D. Conversely, if the sender of the email depresses the cancel button 22 not to agree that the private email address 442 is used as a source email address for sending an email (YES at S315D), the program then proceeds to S319D.

If the answer is NO at S314D, the destination address determining section 54D compares the destination address with the sender' s email address to determine whether these two email addresses have different sub domain names (S316D). S316D performs the same process as S370D. If these two email addresses have different sub domain names (YES at S316D), the program proceeds to S317D. Conversely, if these two email addresses have an identical sub domain name (NO at S316D), the program proceeds to S318D.

If the answer is YES at S316D, the destination address determining section 54D causes the liquid crystal display 23 to display a message, shown in Fig. 24, that prompts the user to decide whether the private email address 442 should be used as a source email address (S317D). Fig. 24 illustrates an example of the message displayed at S317D.

If the sender of the email depresses the confirmation button 21 to agree that the private email address 442 is used as a source email address for sending an email (YES at S317D), the program then proceeds to S318D. Conversely, if the sender of the email depresses the cancel button 22 not to agree that the private email address 442 is used as a source email address for sending the email (NO at S317D), the program proceeds to S319D.

If the answer is NO at S316D, the program proceeds to S318D. The answer "NO" at S316D indicates that the email is to be sent to a destination within the same department and therefore there is no risk of information leaking to the outside. Thus, the sender's private email address 442 can be directly used as a source email address.

If the answer is YES at S315D, NO at S316D, or YES at S317D, the source email address deciding section 53D sends the sender' s private email address 442 obtained at S311D to the mail generating section 52A (S318D). The program then proceeds to 5150 (Fig. 21).

If the answer is NO at S315D or NO at S317D, the sender cancels transmission of the email. The program then ends.

As described above, if it is determined that the source email address is the private email address 442, then the MFP 100D according to the modification #4 causes, based on the decision of destination address determining section 54D, the liquid crystal display 23 to display a message that the email will be sent using the private email address 442 as a source email address, prompting the user to decide whether the email should be sent or not. This configuration prevents the email to be sent using the private email address 442 as a source email address without approval of the sender.

If the sender agrees that the private email address 442 is used as a source email address, the destination address determining section 54D causes the liquid crystal display 23 to display a message that the private email address is used as a source email address and prompts the user to decide whether the private email address 442 should be used as a source email address. Therefore, this configuration ensures that sender's private email address is not used without the sender's approval.

### Modification #5

The MFP 100 according to the first embodiment has the alternative address table 42 that lists alternative email addresses corresponding to the destinations for each user. The MFP 100E according to the modification #5 has an alternative address table 42E that lists a unique email address (e.g., an email address unique to the MFP 100E or representative of the MFP 100E) independent of the user who logs in the MFP 100E.

### Configuration of MFP according to the modification #5

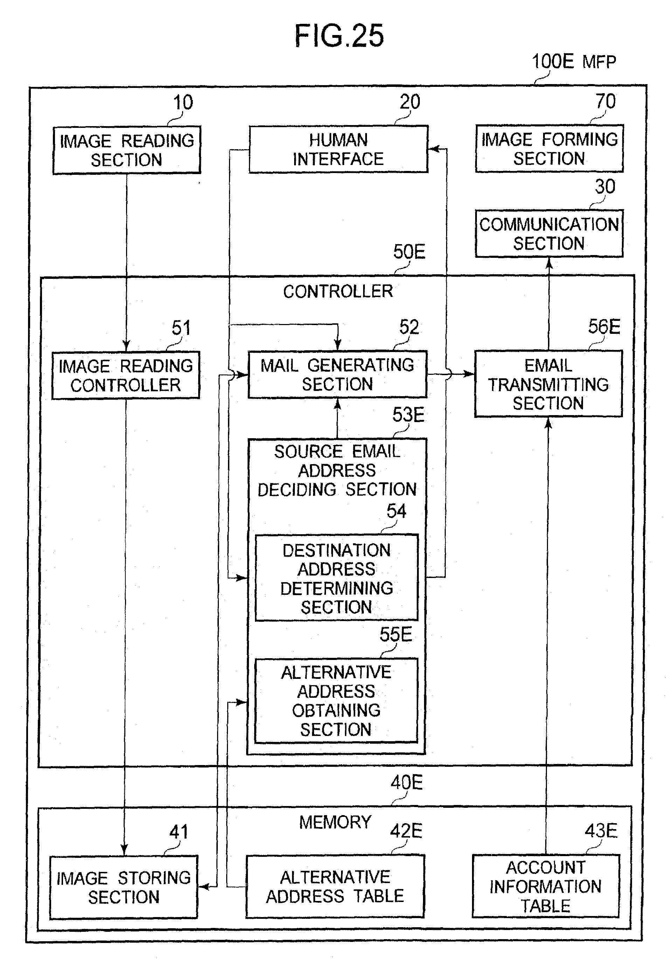

Fig. 25 illustrates the MFP 100E according to the modification #5. The configuration of the MFP 100E will be described with reference to Fig. 25. The MFP 100E differs from the MFP 100 in that (1) the alternative address table 42E holds unique email address independent of the user who logs in the MFP 100E, (2) a memory 40E holds unique account information 43E corresponding to the unique email address, and (3) an alternative address obtaining section 55E and an email transmitting section 56E have different functions from the alternative address obtaining section 55 and email transmitting section 56. The configuration of the respective sections of the MFP 100E will be described below.

### Alternative Address Table

The configuration of the alternative address table 42E includes an apparatus name 420E and the alternative email address 423E. The apparatus name 420E has, for example, an apparatus name "MFP-A." The alternative email address 423E holds a unique email address as an alternative email address, the unique email address being independent of the user who logs in the MFP 100E. The alternative email address 423E holds, for example, an email address mfp-A@dev1.example.com unique to the MFP 100E that serves as an information processing apparatus.

### Unique Account Information

Unique account information 43E is account information unique to the MFP 100E corresponding to an email address unique to the MFP 100E.

### Alternative address Obtaining Section

The alternative address obtaining section 55E searches the alternative address table 42E to obtain the email address mfp-A@dev1.example.com unique to the MFP 100E as an information processing apparatus, the email address mfp-A@dev1.example.com being independent of the user who logs in the MFP 100E.

### Email Transmitting Section

When the sender logs in the MFP 100E, the email transmitting section 56E obtains the unique account information 43E that is unique to the MFP 100E, from the memory 40E, and then logs in the mail server 101 using the obtained unique account information.

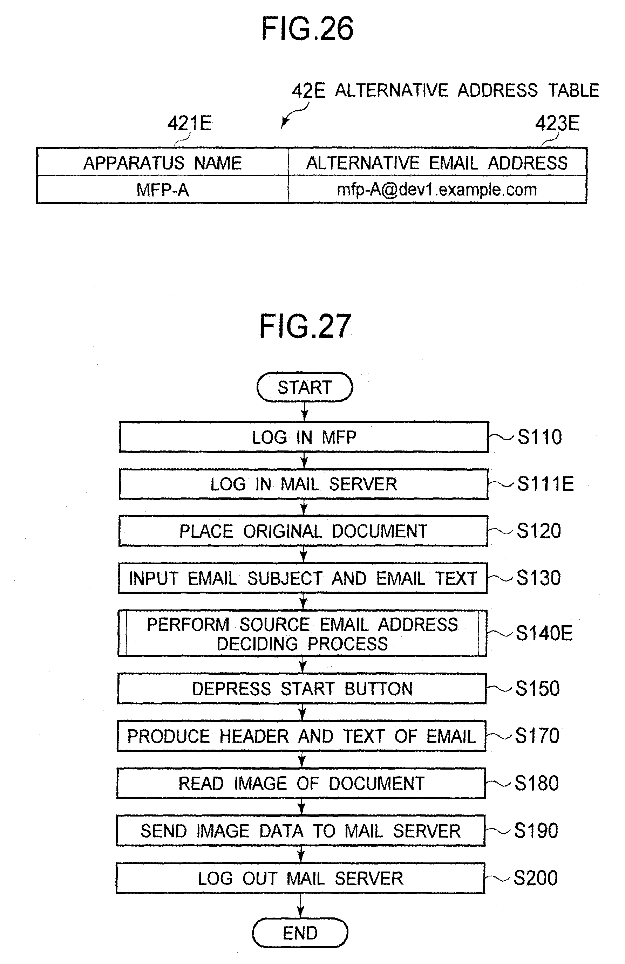

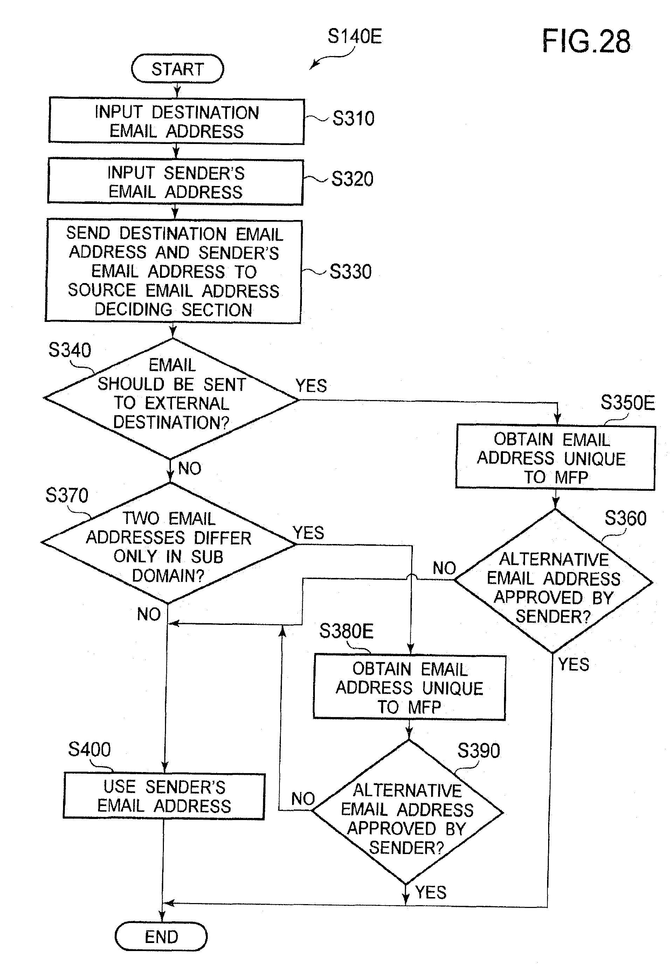

With reference to Figs. 27 and 28, a description will be given of the operation of the Scan-to-Email function in which an image is read with the image reading section 10 of the MFP 100E and is added to an email. Fig. 27 is a flowchart illustrating the email transmission process performed in the MFP 100E. Fig. 28 is a flowchart illustrating the source email address deciding process performed by the MFP 100E. A description will be given only of a portion different from the first embodiment. The other processes are substantially the same as the first embodiment, and therefore the description thereof will be omitted.

Referring to Fig. 27, following S110, the email transmitting section 56E of the MFP 100E obtains the account information 43E unique to the MFP 100E from the memory 40E, and then logs in the mail server 101 using the obtained unique account information 43E (S111E).

Next, following S130, a source email address deciding section 53E of the MFP 100E performs the source email address deciding process (S140E). Fig. 28 illustrates the detail of S140E.

Referring to Fig. 28, if the answer is YES at S340, the alternative address obtaining section 55E of the source email address deciding section 53 searches the alternative address table 42E to obtain the email address mfp-A@dev1.example.com unique to the MFP 100E as an information processing apparatus, the email address mfp-A@dev1.example.com being held in the alternative email address 423E and being independent of the user who logs in the MFP 100E. The program then proceeds to S360.

If the answer is YES at S370, the alternative address obtaining section 55E searches the alternative address table 42E to obtain the email address mfp-A@dev1.example.com unique to the MFP 100E, the email address mfp-A@dev1.example.com being held in the alternative email address 423 and being independent of the user who logs in the MFP 100E (S380E). The program then proceeds to S390.

As described above, if the alternative email address 423 holds an email address unique to the destination irrespective of the user who logs in the MFP 100E, the MFP 100E transmits the email using the email address unique to the MFP 100E irrespective of the user who logs in the MFP 100E, in stead of using the private email address. This eliminates the chance of a sender sending his private mail address inadvertently to the recipient to whom the sender's private mail address should not be disclosed, thereby improving security.

There is no need for the MFP 100E to store the account information table 43. Instead, the MFP 100E has the unique account information 43E that corresponds to the email address unique to the information processing apparatus. Therefore, this eliminates the need for the MFP 100E to have an email address for an external destination and an account corresponding to the email address as swell as the need for the email transmitting section 56E that is used for logging in the mail server 101 for each source emails address.

### Other Modifications

The first embodiment and modifications #1-#5 have the alternative email address table 42 or 42E incorporated in the MFP 100, MFP 100A, MFP 100B, MFP 100C, MFP 100D, or MFP 100E. For example, the alternative email address table 42 or 42E may be stored in a light weight directory access protocol (LDAP) external to the MFP 100, MFP 100A, MFP 100B, MFP 100C, MFP 100D, or MFP 100E. The alternative email address tables 42 and 42E may also be stored in an external storage apparatus by a variety of ways. A description will be given of the configuration in which the alternative email address table 42 is stored in an IC card as an authentication medium.

The networks 112 and 113 described in the first embodiment and modifications #1-#5 are not limited to LANs but may be of any configuration as long as the network is capable of sending and receiving emails.

The first embodiment and modifications #1 to #5 have been described with respect to a single email sent to only one email address for simplicity. The MFP 100 and 100A-100E may operate in the same manner when a single email is to be sent to a plurality of email address, for example, in multi-address transmission.

Further, the first embodiment and modifications #1-#5 may be combined in any way.

### Second embodiment

The MFP 100 according to the first embodiment has the alternative address table 42. A second embodiment does not use the alternative address table 42 but receives an alternative address from the outside.

### Configuration of MFP according to Second Embodiment

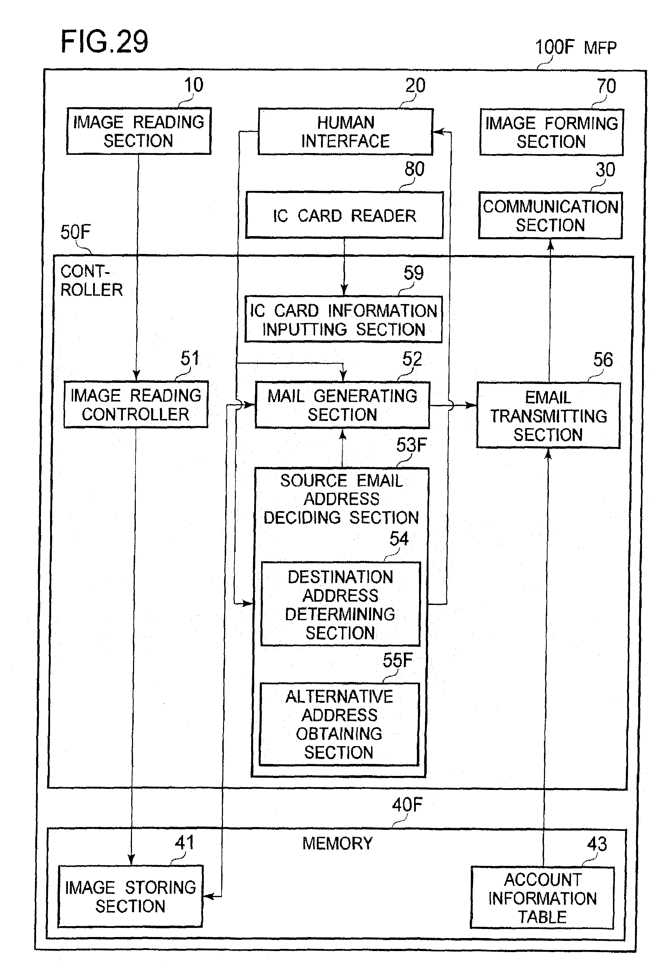

Fig. 29 illustrates an MFP 100F as an information processing apparatus according to the second embodiment. The configuration of the MFP 100F will be described with reference to Fig. 29. The MFP 100F differs from the MFP 100 in that an IC card reader 80 as an authentication medium reader is incorporated and a memory 10F has not the alternative address table 42 (Fig. 2) thereon. The configuration of the information stored in the IC card (not shown) as an authentication medium will be described first, and then the respective sections of the MFP 100F will be described.

### IC card

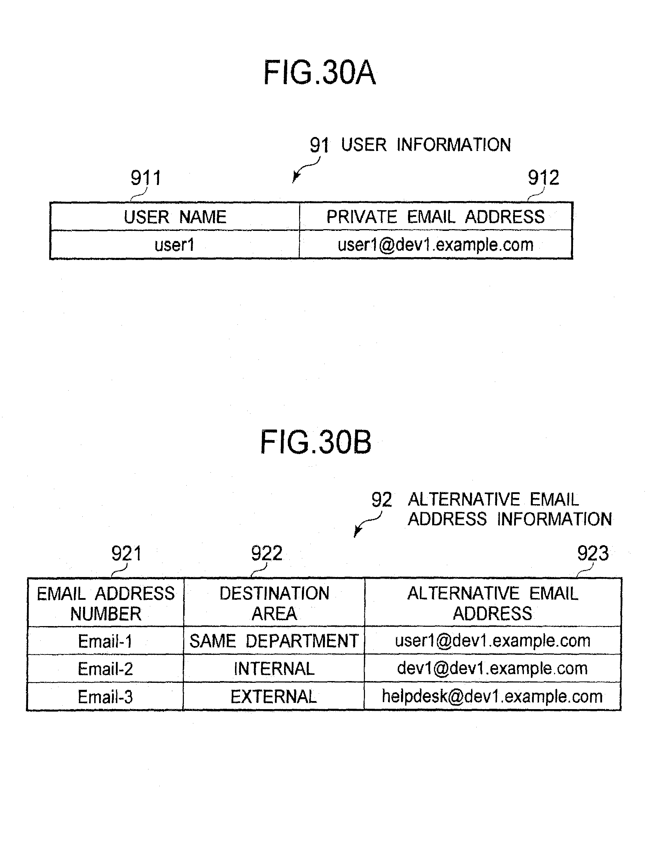

Figs. 30A and 30B illustrate the configuration of the information stored in the IC card. The IC card is a non-contact authentication medium that communicates with the IC card reader 80. The configuration of the information stored in the IC card will be described with reference to Figs. 30A and 30B. The IC card holds user information 91 (Fig. 30A) and a plurality of items of alternative email address information 92 (Fig. 30B). The user information 91 holds information about users who owe IC cards, and the alternative email address information 92 holds information about alternative email addresses that should be used as source address for emails.

User information 91 includes a user name 911 and a private email address 912. The user name 911 holds user name (e.g. user1) who is the owner of the IC card. The private email address 912 holds an email address (e.g., user1@dev1.example.com) that corresponds to the user1.

The alternative email address information 92 includes email address number 921, destination area 922, and alternative email address 923. The email address number 921 holds email address numbers in a consecutive order. The destination area 922 holds the destination to which the email in the email address number 921 should be sent. The destination includes the external destination, the internal destination, and the same destination within the same department. While the second embodiment uses the external destination, internal destination, and destination within the same department, the destination area 922 may have more destinations. The alternative email address 923 holds alternative email address as a source email address that corresponds to each destination in the destination area 922.

For example, if an email is to be sent to the department to which the user1 having the IC card belongs, the email address user1@dev1.example.com is used as a source email address. If an email is to be sent to the internal destination to which the user1 having the IC card belongs, the email address dev1@dev1.example.com is used. If an email is to be sent to an external destination, i.e., outside of the company to which the user1 having the IC card belongs, the email address helpdesk@dev1@dev1.example.com is used.

### IC card Reader

The IC card reader 80 reads user the information 91 (Fig. 30A) and the alternative email address information 92 (Fig. 30B) .

### IC Card Information Inputting Section

The IC card information inputting section 59 controls the IC card reader 80 and sends the information, which is read from an IC card and stored in the IC card reader 80, to a source email address deciding section 53F.

### Operation of MFP according to Second Embodiment

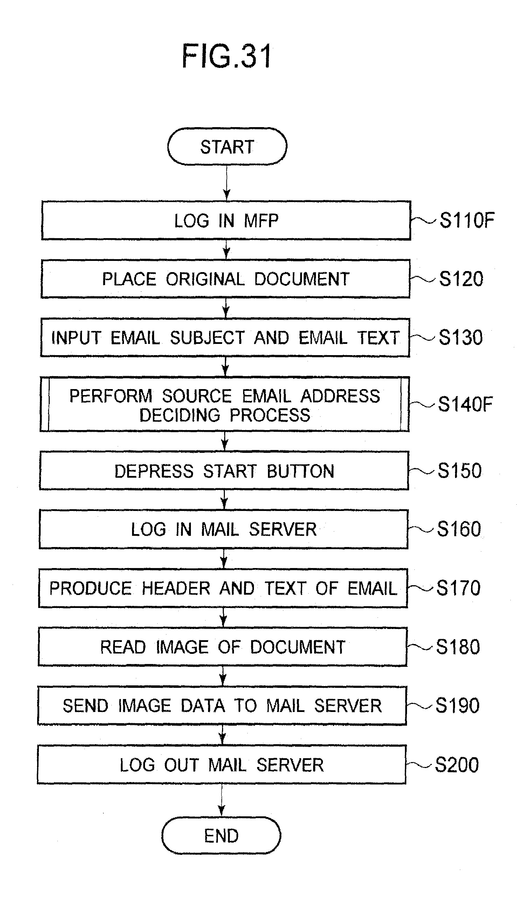

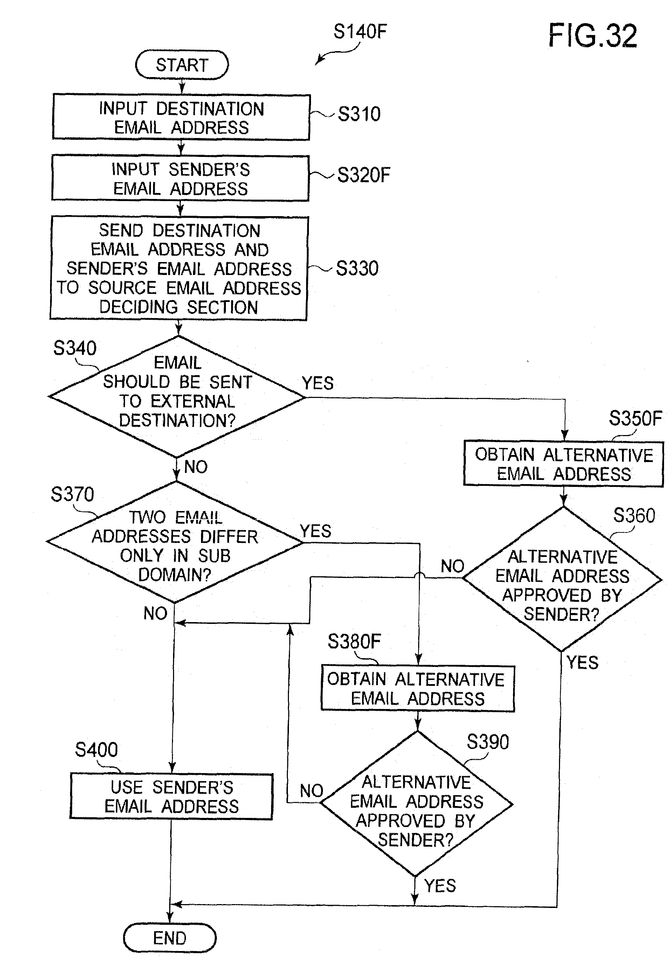

With reference to Figs. 31 and 32, a description will be given of the operation of the Scan-to-Email function in which an image read with an image reading section 10 of the MFP 100F is sent as an attachment of an email. Fig. 31 is a flowchart illustrating an email transmission process performed in the MFP 100F. A description will be given only of a portion different from the first embodiment. The other portions are much the same as the first embodiment, and the description thereof is omitted.

First, referring to Fig. 31, a user 1 (sender of an email) holds his IC card against the IC card reader 80 installed in the MFP 100F, thereby authenticating the user1 so that the user1 is permitted to log in (S111F):

Next, following S130, the source email address deciding section 53F of the MFP 100F performs the source email address deciding process (S140F). Fig. 32 illustrates the detail of the source email address deciding process.

Referring to Fig. 32, following S310, the user21 holds his IC card close to the IC card reader 80, thereby inputting the email address of the sender (S320F). The IC card reader 80 reads a private email address 912 user1@dev1.example.com from the IC card.

If the answer is YES at S340, an alternative address obtaining section 55F of the source email address deciding section 53F reads the alternative address information 92 from the IC card via the IC card reader 80, thereby obtaining an alternative email address helpdesk@dev1.example.com that corresponds to the destination area "external" (S350F).

If the answer is YES at S370, the alternative address obtaining section 55F reads the alternative email address information 92 from the IC card via the IC card reader 80, thereby obtaining the alternative email address dev1@dev1.example.com that corresponds to an internal destination (S380F).

As described above, the MFP 100F provides the advantages obtained from the first embodiment, and alleviates time and effort for inputting a source email address.

The configuration of the first embodiment and modifications #1 to #5 may be applied to the second embodiment, so that the second embodiment also provides the same advantages as the first embodiment and modifications #1 to #5.

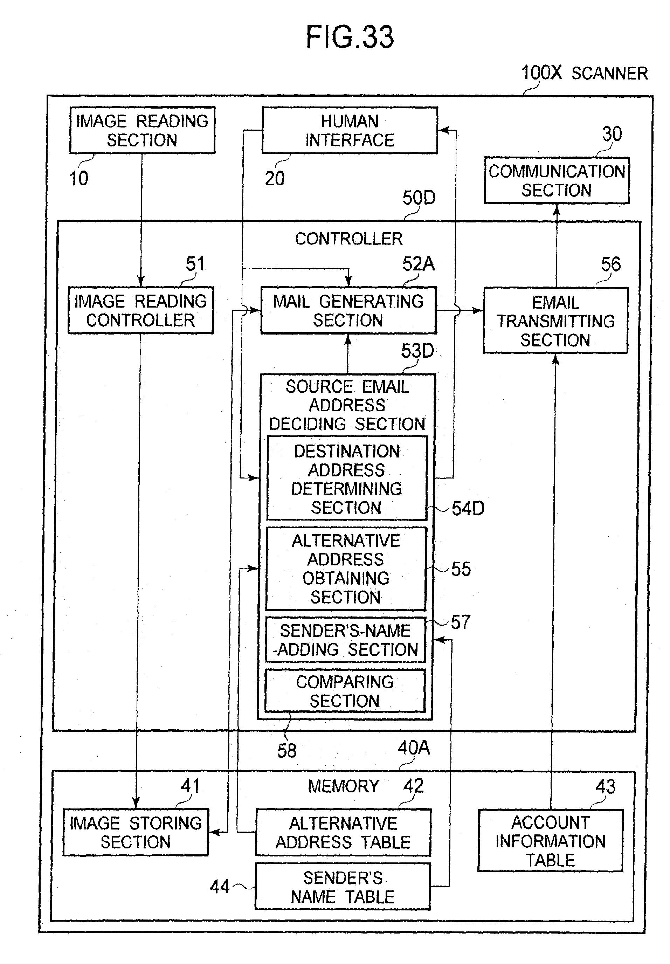

Fig. 33 illustrates the configuration in which the image information processing apparatus is used as a scanner. Fig. 33 illustrates the modification #4 applied to a scanner. A scanner 100X as an image reading apparatus has the same configuration as the modification #4 shown in Fig. 20 except that the image forming section 70 is not used. Elements similar to those of the modification #4 have been given the same reference characters. The first and second embodiments and modifications can also be applied to the scanner 100X.

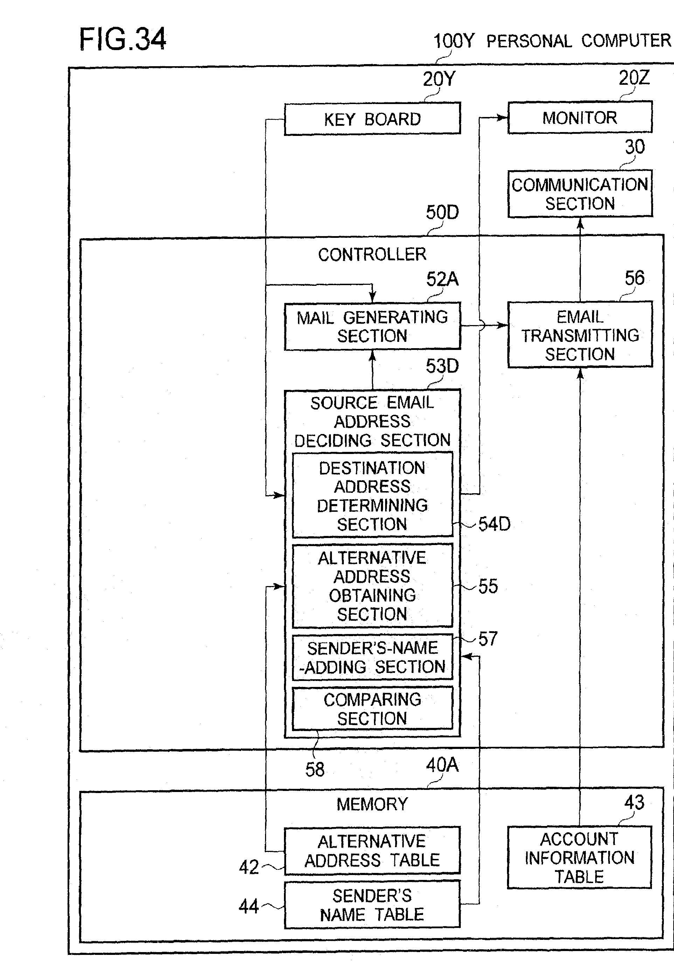

Fig. 34 illustrates a configuration in which the information processing apparatus according to the present invention is used as a personal computer (PC). A PC 100Y has the same configuration shown in Fig. 20 except that the image reading section 10, image storing section 41, image reading controller 51, image forming section 70, and human interface 20 are not used and a keyboard 20Y and a monitor 20Z are used. The other portions of the configuration are the much same as those of the modification #4, and therefore the description thereof is omitted. While the PC 100Y shown in Fig. 34 has been described in terms of the modification #4, the first and second embodiments and other modifications may also be combined in a variety of ways.

The invention being thus described, it will be obvious that the same may be varied in many ways. Such variations are not to be regarded as a departure from the spirit and scope of the invention, and all such modifications as would be obvious to one skilled in the art intended to be included within the scope of the following claims.

## Claims

1. An information processing apparatus comprising:
an email generating section (52) configured to generate an email;
an inputting section (20) through which destination information for the email is inputted;
an email transmitting section (56) configured to transmit the email to a destination;
a destination address determining section (54) configured to determine the destination based on the destination information received through the inputting section; and
a source email address deciding section (53) configured to decide a source email address of the email based on the determination made by the destination address determining section (54).

2. The information processing apparatus according to claim 1 further comprising:
an alternative email address storing section in which an alternative email address is stored;
wherein if the destination address determining section (54) determines that the destination is one of an external destination and an internal destination, then the source email address deciding section decides to send the email to the destination using the alternative email address as the source email address.

3. The information processing apparatus according to claim 2 further comprising a display section (23);
wherein if the source email address deciding section (53) decides that the email should be sent to the destination using the alternative email address as the source email address, then the display section (23) displays to a sender that the email should be sent to the destination using the alternative email address as the source email address.

4. The information processing apparatus according to claim 1 to 3 further comprising a display section, wherein if the source email address deciding section (53) decides, based on the destination information received through the inputting section, that the email should be sent using a sender's private mail address as the source email address, then the display section (23) displays to the sender of the email that the email should be sent to the destination using the sender's private mail address as the source email address.

5. The information processing apparatus according to any one of claims 1 to 4 further comprising a sender' s-name-adding section (57) configured to add a sender's name to the email, wherein if the source email address deciding section (53) decides that the alternative email address is used as the source email address, the sender's-name-adding section (57) adds the sender's name to the email.

6. The information processing apparatus according to any one of claims 1 to 5 further comprising an account information storing section (43) configured to hold an item of account information corresponding to an email address;
wherein the email transmitting section (56) searches the account information storing section (43) using the source email address decided by the source email address deciding section (53) to obtain the item of account information, and then logs in an external mail server (101) using the account information.

7. An information processing apparatus comprising:
an email generating section (52) configured to generate an email;
an inputting section (20) through which destination information for the email is received;
an email transmitting section (56) configured to transmit the email to a destination;
a source email address deciding section (53) configured to decide the destination based on the destination information; and
a display section (23);
wherein if the source email address deciding section (53) decides, based on the destination information received through the inputting section (20), that the sender's private email address should be used as the source email address, then the display section displays to a sender that the sender's private email address should be used as the source email address.

8. The information processing apparatus according claim 7 further comprising a destination address determining section (54) configured to determine the destination based on the destination information received through the inputting section;
wherein the source email address deciding section (53) decides the source email address based on the determination made by the destination address determining section (54).

9. The information processing apparatus according claim 7 or 8 further comprising an account information storing section configured to hold a plurality of items of account information, each item of account information corresponding to a specific email address;
wherein the email transmitting section (56) searches the account information storing section (43) using the source email address decided by the source email address deciding section (53) to obtain the item of account information, and then logs in an external mail server (101) using the account information.

10. The information processing apparatus according to claim 8 or 9 further comprising:
an alternative email address storing section in which at least one alternative email address is stored;
wherein if the destination address determining section (54) determines that the destination is one of an external destination and an internal destination, then the source email address deciding section decides the alternative email address as the source email address.

11. The information processing apparatus according to claim 1 further comprising an address reading section (80) configured to read an email address from an address storing medium;
wherein the source email address deciding section (53) decides the email address, read from the address storing medium through the address reading section (10), as the source email address.

12. The information processing apparatus according to any one of claim 1 to 11, wherein the email transmitting section (56) logs in the external mail server (101) after the source email address deciding section (53) has decided the source email address.

13. The information processing apparatus according to any one of claims 1 to 11, wherein the email transmitting section (56) logs in the external mail server (101) before the source email address deciding section (53) has decided the source email address.

14. An multi function printer incorporating an information processing apparatus according to any one of claims 1 to 12, the multi function printer further comprising:
an image reading section (10) configured to read an image of a document; and
an image forming section (70) configured to print the image.
